# FASCICULE DE BREVET EUROPEEN

(11) **EP 2 368 083 B1**
(45) Date de publication et mention de la délivrance du brevet: **24.07.2019**
(21) Numéro de dépôt: 09795481.2
(22) Date de dépôt: 20.11.2009
(51) Int. Cl.: F25J 1/02, F25J 1/00

(54) **PROCÉDÉ DE PRODUCTION D'UN COURANT DE GAZ NATUREL LIQUÉFIÉ SOUS-REFROIDI À PARTIR D'UN COURANT DE CHARGE DE GAZ NATUREL ET INSTALLATION ASSOCIÉE.**
VERFAHREN ZUR ERZEUGUNG EINES STROMS AUS UNTERKÜHLTEM VERFLÜSSIGTEM ERDGAS UNTER VERWENDUNG EINES ERDGASZUFUHRSTROMS UND ZUGEHÖRIGE EINRICHTUNG
METHOD FOR PRODUCING A STREAM OF SUBCOOLED LIQUEFIED NATURAL GAS USING A NATURAL GAS FEEDSTREAM, AND ASSOCIATED FACILITY

(30) Priorité: 25.11.2008 FR 0857996
(43) Date de publication de la demande: 28.09.2011
(73) Titulaire: Technip France, 92400 Courbevoie (FR)
(72) Inventeur: PARADOWSKI, Henri, F-56330 Pluvigner (FR); VOVARD, Sylvain, 78430 Louveciennes (FR)
(74) Mandataire: Lavoix
(86) Numéro de dépôt international: PCT/FR2009/052239
(87) Numéro de publication internationale: WO 2010/061102

(56) Documents cités:
- WO-A-2007/021351
- DE-A1- 10 355 935
- US-A- 5 931 021
- US-A1- 2003 089 125
- US-A1- 2006 225 461
- US-B1- 6 601 407

## Description

La présente invention concerne un procédé et une installation associée de production d'un courant de gaz naturel liquéfié sous-refroidi à partir d'un courant de charge de gaz naturel, ce procédé étant destiné à former du gaz naturel liquéfié (GNL) sous-refroidi à une température inférieure à -120°C.

Un tel procédé est destiné à être mis en oeuvre notamment au voisinage des sites de production de gaz naturel, en vue de transformer une charge de gaz naturel de grand volume, en un gaz naturel liquéfié de volume réduit. Le GNL peut notamment être chargé dans des méthaniers pour être acheminé par voie maritime vers des foyers de consommation.

Ce procédé est destiné à être mis en oeuvre soit dans de nouvelles unités de liquéfaction de gaz naturel, soit dans des unités déjà existantes.

Pour liquéfier une charge de gaz naturel, il est fréquent d'utiliser un procédé comprenant plusieurs cycles de réfrigération utilisant des fluides réfrigérants formés par des hydrocarbures en C₂⁺.

Un exemple de tel procédé, désigné par l'acronyme «C3/MR» utilise deux cycles de réfrigération, avec un premier cycle au propane et un deuxième cycle utilisant un mélange de réfrigérants composé d'azote, de méthane, d'éthane et de propane.

Les réfrigérants circulant dans ces cycles sont au moins partiellement liquéfiés après leur compression sous forme gazeuse, par exemple en subissant une détente statique dans une vanne de détente.

Le liquide ainsi obtenu est placé en relation d'échange thermique avec la charge à différents niveaux de température. Le réfrigérant liquide s'évapore par échange thermique avec la charge, fournissant ainsi des frigories pour le refroidissement, la liquéfaction, et le sous-refroidissement de la charge. Ces cycles réfrigérants peuvent être adaptés thermo-dynamiquement à la charge pour obtenir des rendements très élevés.

Toutefois, ces procédés requièrent l'utilisation et le stockage de réfrigérants sous forme liquide, aussi bien au sein de l'unité de liquéfaction, qu'en dehors de celle-ci. Ainsi, il est nécessaire de produire ou de fournir sous forme liquide, et de stocker au moins temporairement des hydrocarbures tels que du propane et de l'éthane. Ceci nécessite des précautions particulières en termes de sécurité et une infrastructure adaptée pour éviter des accidents.

De tels procédés ne sont donc pas adaptés pour des environnements présentant un faible espace disponible et/ou des contraintes de sécurité, comme notamment les unités flottantes de récupération, de stockage et de traitement des hydrocarbures désignés par l'acronyme anglais «FPSO» ou les plateformes situées en mer directement au dessus de gisements sous marins de gaz naturel.

Ainsi, dans ces deux derniers cas, il est nécessaire de convoyer le gaz naturel jusqu'à une unité de liquéfaction située à terre, ce qui est peu économique, et ce qui requiert la pose d'un pipeline sous marin.

Pour pallier ce problème, on connaît de US-5,768,912 un procédé du type précité utilisant pour le pré-refroidissement et la liquéfaction du gaz naturel, un premier cycle à réfrigérant mixte classique, suivi d'un deuxième cycle complexe comprenant trois turbines dynamiques d'expansion de gaz.

Dans le deuxième cycle, le fluide réfrigérant est formé essentiellement par de l'azote qui reste gazeux durant toute sa circulation dans le cycle.

Un tel procédé permet donc de s'affranchir partiellement des difficultés liées au transport, au stockage et à l'utilisation de fluides réfrigérants liquides et dangereux formés par des hydrocarbures en C₂⁺. Il est en outre peu sensible aux mouvements de l'unité dans laquelle il est mis en oeuvre, notamment lorsque cette unité est embarquée sur un ensemble flottant.

Ce procédé présente néanmoins un rendement thermodynamique faible, qui rend son exploitation couteuse en énergie. Un procédé et une installation selon les préambules des revendications 1 et 16 respectivement sont connus du document US-A-2003/0089125.

Un but de l'invention est donc de pré-refroidir, de liquéfier, et de sous-refroidir une charge de gaz naturel de manière sûre, dans un espace limité et potentiellement flottant sur une étendue d'eau, tout en étant très économique.

A cet effet, l'invention a pour objet un procédé selon la revendication 1.

Le procédé selon l'invention peut comprendre une ou plusieurs des caractéristiques des revendications 2 à 15.

L'invention a également pour objet une installation selon la revendication 16.

L'installation selon l'invention peut comprendre une ou plusieurs des caractéristiques des revendications 17 à 20.

L'invention sera mieux comprise à la lecture de la description qui va suivre, donnée uniquement à titre d'exemple, et faite en se référant aux dessins annexés, sur lesquels :
- la Figure 1 est un schéma synoptique fonctionnel d'une première installation de mise en oeuvre d'un premier procédé de production selon l'invention ;
La Figure 2 est une vue analogue à la Figure 1 d'une deuxième installation de mise en oeuvre d'un deuxième procédé de production selon l'invention ;
La Figure 3 est une vue analogue à la Figure 1 d'une troisième installation de mise en oeuvre d'un troisième procédé de production selon l'invention ;
La Figure 4 est une vue analogue à la Figure 1 d'une quatrième installation de mise en oeuvre d'un quatrième procédé de production selon l'invention ;
La Figure 5 est une vue analogue à la Figure 1 d'une cinquième installation de mise en oeuvre d'un cinquième procédé de production selon l'invention ;
La Figure 6 est une vue analogue à la Figure 1 d'une sixième installation de mise en oeuvre d'un sixième procédé de production selon l'invention ;
La Figure 7 est une vue analogue à la Figure 1 d'une septième installation de mise en oeuvre d'un septième procédé de production selon l'invention ;
La Figure 8 est une vue analogue à la Figure 1 d'une huitième installation de mise en oeuvre d'un huitième procédé de production selon l'invention ; et
La Figure 9 est une vue analogue à la Figure 1 d'une neuvième installation de mise en oeuvre d'un neuvième procédé de production selon l'invention.

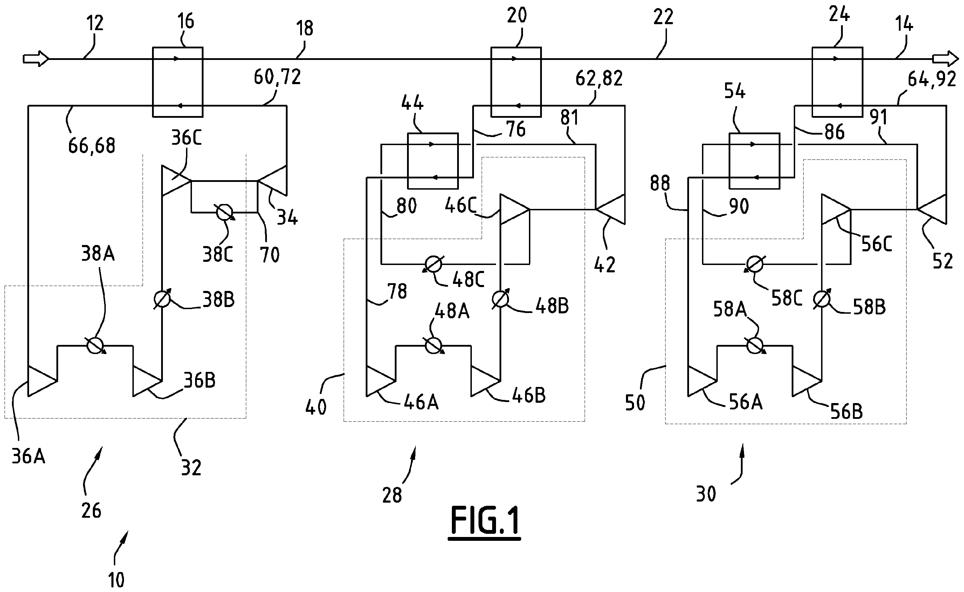

La Figure 1 illustre une première installation 10 selon l'invention, destinée à liquéfier et à sous-refroidir un courant 12 d'une charge de gaz naturel obtenu sous forme gazeuse pour former un courant 14 de gaz naturel liquéfié (GNL) sous-refroidi.
Cette installation 10 comprend un premier échangeur thermique 16 de pré-refroidissement du courant de charge 12 pour former un courant 18 de charge pré-refroidie, un deuxième échangeur thermique 20 de liquéfaction du courant de charge pré-refroidie 18 pour former un courant 22 de gaz naturel liquéfié et un troisième échangeur thermique 24 pour sous-refroidir le courant de gaz naturel liquéfié et former le courant de GNL sous-refroidi 14.

L'installation 10 comprend en outre un premier cycle 26 de réfrigération destiné à alimenter le premier échangeur thermique 16, un deuxième cycle 28 de réfrigération destiné à alimenter le deuxième échangeur thermique 20 et un troisième cycle 30 de réfrigération destiné à alimenter le troisième échangeur thermique 24.

Les cycles de réfrigération 26, 28, 30 sont des cycles de type «Brayton inversé» fonctionnant chacun avec un fluide réfrigérant essentiellement gazeux qui subit une détente dynamique.

Ainsi, le premier cycle de réfrigération 26 comprend un premier appareil de compression 32, et une première turbine de détente dynamique 34.

Le premier appareil de compression 32 comprend, dans cet exemple, plusieurs étages de compression, chaque étage comprenant un compresseur 36A, 36B, 36C et un réfrigérant 38A, 38B, 38C monté en série à la sortie d'un compresseur 36A, 36B, 36C.

Le dernier compresseur 36C du premier appareil 32 est couplé en rotation avec la première turbine 34 pour être entraîné en rotation de préférence principalement par cette turbine 34. Les compresseurs 36A, 36B sont de préférence entraînés en rotation par un moteur commun.

Le deuxième cycle de réfrigération 28 comprend un deuxième appareil de compression 40, et une deuxième turbine de détente dynamique 42 distincte de la première turbine 34. Il comprend en outre un deuxième échangeur de cycle 44.

Le deuxième appareil de compression 40 comprend une structure analogue à celle du premier appareil de compression 32. Il présente ainsi, dans cet exemple, plusieurs étages de compression, chaque étage comprenant un compresseur 46A, 46B, 46C et un réfrigérant 48A, 48B, 48C monté en série à la sortie d'un compresseur 46A, 46B, 46C.

Le dernier compresseur 46C du deuxième appareil 40 est couplé en rotation avec la deuxième turbine 42 pour être entraîné en rotation de préférence principalement par cette turbine 42. Les compresseurs 46A, 46B sont de préférence entraînés en rotation par un moteur commun.

Le troisième cycle de réfrigération 30 comprend un troisième appareil de compression 50, une troisième turbine de détente 52 et un troisième échangeur de cycle 54.

Le troisième appareil de compression 50 présente une structure analogue à celle du premier appareil de compression 32. Il présente ainsi, dans cet exemple, plusieurs étages de compression, chaque étage comprenant un compresseur 56A, 56B, 56C et un réfrigérant 58A, 58B, 58C monté en série à la sortie d'un compresseur 56A, 56B, 56C.

Le dernier compresseur 56C du troisième appareil 50 est couplé en rotation avec la troisième turbine 52 pour être entraîné en rotation de préférence principalement par cette turbine 52. Les compresseurs 56A, 56B sont de préférence entraînés en rotation par un moteur commun.

Dans l'exemple représenté sur la figure 1, les trois cycles de réfrigération 26, 28, 30, sont totalement disjoints. Ils fonctionnent chacun respectivement avec un premier fluide réfrigérant, avec un deuxième fluide réfrigérant, et avec un troisième fluide réfrigérant, sans mélange, ni échange thermique entre ces fluides.

Les compresseurs respectifs du premier appareil de compression 26, du deuxième appareil de compression 28 et du troisième appareil de compression 30 sont tous distincts.

Un premier procédé de liquéfaction et de sous-refroidissement selon l'invention va maintenant être décrit.

Dans tout ce qui suit, on désignera par une même référence un courant de fluide et la conduite qui le véhicule. De même, les pressions considérées sont des pressions absolues et, sauf indication contraire, les pourcentages considérés sont des pourcentages molaires.

Le rendement de chaque compresseur dans cet exemple de 82 % polytropique et le rendement de chaque turbine est de 86 % adiabatique.

Le courant de charge 12 est, dans cet exemple, un courant de gaz naturel comprenant en mole 4,00 % d'azote, 87,50 % de méthane, 5,50 % d'éthane, 2,10 % de propane, 0,30 % d'hydrocarbure en i-C₄, 0,50 % d'hydrocarbure en n-C₄, et 0,10 % d'hydrocarbure en i-C₅. Ainsi, ce courant 12 comprend une teneur molaire en hydrocarbures supérieure à 80 % et une teneur molaire en azote comprise entre 0 % et 20 %.

Ce courant de charge présente une température inférieure à 50 °C et par exemple comprise entre 50 °C et 0°C, dans cet exemple égale à 35°C. Il présente une pression supérieure à 30 bars et notamment comprise entre 30 bars et 90 bars, avantageusement égale à 66,5 bars.

Ce courant de charge 12 est, dans cet exemple, exclusivement gazeux. Il présente une fraction liquide inférieure à 0.1 % en masse.

Le débit molaire de charge à traiter est dans cet exemple supérieur à 20 kmoles/h et est avantageusement égal à 40 000 kmoles/h.

Le courant de charge 12 est introduit dans le premier échangeur thermique 16, où il se pré-refroidit jusqu'à une température inférieure à -20°C, notamment égale à -40°C, par échange thermique avec un premier courant 60 de réfrigérant formé du premier fluide réfrigérant circulant dans le premier cycle de réfrigération 26.

Ce courant 12 forme, à la sortie du premier échangeur thermique 16, le courant de charge pré-refroidie 18. Ce courant de charge 18 est essentiellement gazeux, de sorte qu'il présente une fraction volumique en liquide inférieure à 5 %

Puis, le courant de charge pré-refroidie 18 est introduit dans le deuxième échangeur thermique 20, où il est condensé à contre-courant d'un deuxième courant 62 de réfrigérant gazeux formé du deuxième fluide réfrigérant circulant dans le deuxième cycle de réfrigération 28.

Le courant 18 forme, à la sortie du deuxième échangeur thermique 20, le courant de GNL 22, qui présente une température inférieure à -80°C, et notamment sensiblement égale à -90°C.

Puis, le courant de GNL 22 est introduit dans le troisième échangeur thermique 24, où il est placé en relation d'échange thermique à contre-courant avec un troisième courant 64 de réfrigérant gazeux formé du troisième fluide réfrigérant circulant dans le troisième cycle 30.

Le courant 22 forme, à la sortie du troisième échangeur thermique 24, le courant de GNL sous-refroidi 14, qui est produit à une température inférieure à -120°C, et notamment égale à -148,1 °C.

Le courant de GNL sous-refroidi 14 présente en outre une pression légèrement inférieure à la pression du courant de charge 12, par exemple inférieure à 10% de la pression du courant de charge 12 et dans cet exemple, égale à 62 bars.

Dans l'exemple représenté sur la figure 1, le premier cycle de réfrigération 26 est un cycle fermé de type Brayton inversé.

Dans ce cycle, le premier courant 66 de réfrigérant réchauffé issu du premier échangeur thermique 16 forme la totalité d'un premier courant 68 de fluide réfrigérant réchauffé basse pression, qui est injecté à une entrée du premier compresseur 36A de l'appareil de compression 32.

Le premier courant de réfrigérant réchauffé 66 est convoyé vers le premier appareil de compression 32 sans passer par le deuxième échangeur thermique 20, ni par le troisième échangeur thermique 24. Il n'est pas remis en relation d'échange thermique avec la charge de gaz naturel entre la sortie du premier échangeur 16 et l'entrée du premier appareil de compression 32.

Le premier courant basse pression 68 est comprimé successivement dans chaque compresseur 36A, 36B, 36C, en étant refroidi à la sortie de chaque compresseur 36A, 36B, 36C par un réfrigérant 38A, 38B, 38C.

Le réfrigérant est à base d'eau ou d'air disponible dans l'installation 10. Il présente ainsi une température comprise par exemple entre 0°C et 40°C.

A la sortie du premier appareil de compression 26, le courant 68 forme un premier courant 70 de réfrigérant comprimé qui présente une pression supérieure à 60 bars et notamment sensiblement égale à 75 bars. Le courant 70 présente une température sensiblement égale à celle des réfrigérants 38A, 38B, 38C, soit environ 36°C dans cet exemple.

Puis, le courant 70 est injecté dans la première turbine 34 de détente dynamique, où il subit une détente dynamique jusqu'à une pression inférieure à 25 bars, et notamment égale à environ 17 bars. Le courant 70 forme, à la sortie de la turbine de détente 34, un premier courant 72 de réfrigération détendu qui constitue en totalité le premier courant de réfrigérant 60. Ce courant 60 présente une température inférieure à -22 °C et notamment sensiblement égale à -60 °C.

Le débit du premier courant de réfrigérant est dans cet exemple sensiblement égal à 59960 kmoles/h.

Le premier fluide réfrigérant circulant dans le premier cycle de réfrigération 26 est exclusivement gazeux. Il comprend ainsi une teneur en liquide inférieure à 1 % en volume.

Dans un premier mode de réalisation (cas 1), ce fluide est composé à plus de 90 % en mole d'azote, avantageusement de 100 % en mole d'azote.

Dans une autre variante (cas 1 bis), ce fluide est composé par du gaz naturel comprenant avantageusement plus de 70 % de méthane, et notamment plus de 85 % de méthane et plus de 5 % d'hydrocarbure en C₂⁺. Ce réfrigérant est formé avantageusement par du gaz de charge 12.

Lorsque du dioxyde de carbone est disponible dans l'installation 10, par exemple en étant produit dans l'installation par décarbonatation du gaz naturel brut, il est avantageux d'en introduire au moins 10 %, avantageusement au moins 18 %, dans le premier fluide réfrigérant. Dans une variante (cas 1ter), le premier fluide réfrigérant comprend environ 20% de dioxyde de carbone.

A la sortie du deuxième échangeur thermique 20, le deuxième courant 62 forme un deuxième courant de réfrigérant réchauffé 76 qui est introduit dans le deuxième échangeur de cycle 44 pour former un deuxième courant 78 de réfrigérant basse pression destiné à être introduit dans le deuxième appareil de compression 28.

Le deuxième courant de réfrigérant réchauffé 76 est convoyé vers le premier appareil de compression 32 sans passer par le premier échangeur thermique 16, ni par le troisième échangeur thermique 24. Il n'est pas remis en relation d'échange thermique avec la charge de gaz naturel entre la sortie du deuxième échangeur 20 et l'entrée du deuxième appareil de compression 40.

Le deuxième courant basse pression 78 passe alors successivement dans chaque compresseur 46A, 46B, 46C et dans chaque réfrigérant 48A, 48B, 48C, pour être comprimé jusqu'à une pression supérieure à 40 bars, par exemple égale à environ 50 bars, après son passage dans le compresseur 46B, puis jusqu'à une pression de préférence supérieure à 60 bars et par exemple sensiblement égale à 75 bars après son passage dans le compresseur 46C attelé de préférence à la deuxième turbine de détente 42.

A la sortie du réfrigérant 48C, un deuxième courant 80 de réfrigérant comprimé est formé.

Ce courant 80 est refroidi dans le deuxième échangeur de cycle 44 à contre-courant du deuxième courant de réfrigérant réchauffé 76, pour former un deuxième courant 81 comprimé refroidi à une température inférieure à -20 °C et notamment égale à environ -37°C.

Puis, le courant 81 est introduit dans la deuxième turbine de détente 42 pour former un deuxième courant 82 de réfrigérant détendu qui constitue dans sa totalité le deuxième courant de réfrigérant 62 introduit dans le deuxième échangeur 20.

La pression du deuxième courant de réfrigérant 62 à l'entrée de l'échangeur 20 est inférieure à 32 bars et est notamment égale à environ 27 bars.

La température du deuxième courant de réfrigérant 62 à l'entrée de l'échangeur 20 est inférieure à -80°C et est notamment égale à -92°C. Le débit du deuxième courant de réfrigérant 62 est dans cet exemple sensiblement égal à 164 850 kmoles/h.

Le deuxième fluide réfrigérant circulant dans le deuxième cycle de réfrigération 28 est aussi exclusivement gazeux. Il comprend ainsi une teneur en liquide inférieure à 1 % en volume.

Dans un premier mode de réalisation, le deuxième fluide réfrigérant circulant dans le deuxième cycle 28 est formé de plus de 90 % d'azote, avantageusement d'environ 100 % d'azote.

Dans une variante, ce deuxième fluide réfrigérant est formé de gaz naturel contenant plus de 70 % de méthane, et moins de 10 % d'azote.

Après son passage dans le troisième échangeur 24, le troisième courant de réfrigérant 64 forme un troisième courant 86 de réfrigérant réchauffé qui est introduit dans le troisième échangeur de cycle 54 pour former un troisième courant de réfrigérant réchauffé basse pression 88, à une température voisine de l'ambiante et notamment sensiblement égale à 34 °C.

Le troisième courant de réfrigérant réchauffé 86 est convoyé vers le troisième appareil de compression 50 sans passer par le premier échangeur thermique 16, ni par le deuxième échangeur thermique 20. Il n'est pas remis en relation d'échange thermique avec la charge de gaz naturel entre la sortie du troisième échangeur 24 et l'entrée du troisième appareil de compression 50.

Puis, le troisième courant basse pression 88 est introduit successivement dans chaque compresseur 56A, 56B, 56C, et dans chaque réfrigérant 58A, 58B, 58C pour former, à la sortie du troisième appareil de compression 30, un troisième courant de réfrigérant haute pression 90.

La pression du courant 90 à la sortie du compresseur 56B est de préférence supérieure à 40 bars. Après son passage dans le compresseur 56C de préférence couplé à la troisième turbine de détente 52, cette pression est de préférence supérieure à 50 bars, et notamment à 70 bars.

Le troisième courant haute pression 90 est ensuite introduit dans le troisième échangeur de cycle 54 pour être refroidi à contre-courant du troisième courant de réfrigération réchauffé 86 et former un troisième courant 91 comprimé refroidi à une température inférieure à -60 °C et notamment égale à environ -75°C.

Ce courant 91 est ensuite introduit dans la troisième turbine de détente 42, pour former un troisième courant de réfrigération détendu 92 qui constitue dans sa totalité le troisième courant de réfrigérant 64 introduit dans le troisième échangeur 24.

La pression du troisième courant de réfrigérant 64 à l'entrée de l'échangeur 24 est inférieure à 20 bars et est notamment égale à environ 13 bars.

La température du troisième courant de réfrigérant 64 à l'entrée de l'échangeur 24 est inférieure à -120°C et est notamment égale à -150°C. Le débit du troisième courant de réfrigérant 64 est dans cet exemple sensiblement égal à 79 818 kmoles/h.

Dans l'exemple représenté sur la figure 1, le troisième fluide réfrigérant circulant dans le troisième cycle 30 est essentiellement gazeux, c'est-à-dire qu'il comprend moins de 1 % en volume de liquide.

La teneur molaire en azote du troisième fluide réfrigérant est supérieure à 90 %, et est avantageusement égale à 100 %.

Les exemples de température, de pression, et de débit massique des différents courants illustrés dans le procédé de la Figure 1 sont résumés dans les tableaux ci-dessous.

| | | Courant | Cas 1 | Cas 1bis |
|---|---|---|---|---|
| Gaz Naturel | | | | |
| T° Pré-refroidissement | C° | 18 | -40,00 | -40,00 |
| T° Liquéfaction | C° | 22 | -90,00 | -90,00 |
| T° Sous-refroidissement | C° | 14 | -148,10 | -148,10 |

| Réfrigérant cycle 26 | | | | |
|---|---|---|---|---|
| T° Après Détente | C° | 60 | -59,70 | -42,30 |
| Basse Pression | Bara | 68 | 16,60 | 18,80 |
| Haute Pression | Bara | 70 | 75,00 | 75,00 |
| Débit | kmoles/h | 70 | 59960 | 66091 |
| Turbine | kW | | 43196 | 41005 |
| Compresseur | kW | | 46288 | 40610 |
| Teneur Méthane | %mole | 70 | 0,00 | 87,50 |
| Teneur en C2+ | %mole | 70 | 0,00 | 8,50 |
| Teneur Azote | %mole | 70 | 100,00 | 4,00 |

| Réfrigérant cycle 28 | | | | |
|---|---|---|---|---|
| Pré-refroidissement | °C | 81 | -36,85 | -27,75 |
| T°C Après Détente | °C | 62 | -92,00 | -92,00 |
| Basse Pression | Bara | 78 | 26,75 | 22,40 |
| Haute Pression | Bara | 80 | 75,00 | 75,00 |
| Débit | kmoles/h | 80 | 164853 | 124200 |
| Turbine | kW | | 61445 | 45448 |
| Compresseur | kW | | 100891 | 90299 |
| Teneur Méthane | %mole | 80 | 0,00 | 93,00 |
| Teneur en C2+ | %mole | 80 | 0,00 | 0,50 |
| Teneur Azote | %mole | 80 | 100,00 | 6,50 |

| Réfrigérant cycle 30 | | | | |
|---|---|---|---|---|
| Pré-refroidissement | °C | 91 | -74,95 | -74,95 |
| T°C Après Détente | °C | 64 | -150,10 | -150,10 |
| Basse Pression | Bara | 88 | 12,55 | 12,55 |
| Haute Pression | Bara | 90 | 75,00 | 75,00 |
| Débit | kmoles/h | 90 | 79818 | 79818 |
| Turbine | kW | | 34839 | 34839 |
| Compresseur | kW | | 107177 | 107177 |
| Teneur Méthane | %mole | 90 | 0,00 | 0,00 |
| Teneur Azote | %mole | 90 | 100,00 | 100,00 |

La consommation énergétique du procédé, pour différents types de réfrigérant est illustrée dans le tableau 2.

| | | Cas 1 | Cas1bis | Cas 1ter |
|---|---|---|---|---|
| Réfrigérant Cycle 1 | - | N2 | GN2 | GN2+CO2 |
| Réfrigérant Cycle 2 | - | N2 | GN1 | GN1 |
| Réfrigérant Cycle 3 | - | N2 | N2 | N2 |
| Puissance Cycle 1 | kW | 46288 | 40610 | 35895 |
| Puissance Cycle 2 | kW | 100891 | 90299 | 90299 |
| Puissance Cycle 3 | kW | 107177 | 107177 | 107177 |
| Puissance totale | kW | 254356 | 238086 | 233371 |

Comme on le voit sur ces tableaux, malgré le faible rendement énergétique théorique des cycles de réfrigération à détente de gaz, il est possible, en utilisant au moins trois cycles de réfrigération 26, 28, 30 à détente dynamique de gaz disposés en série, d'obtenir un rendement global très satisfaisant.

L'optimisation de la nature des fluides réfrigérants présents dans chaque cycle de réfrigération 26, 28, 30 permet d'améliorer encore le rendement de ces cycles de plus de 15 MW voire de plus de 20 MW en fonction de la teneur en réfrigérant choisie, ce qui est considérable compte tenu des débits de fluide traités.

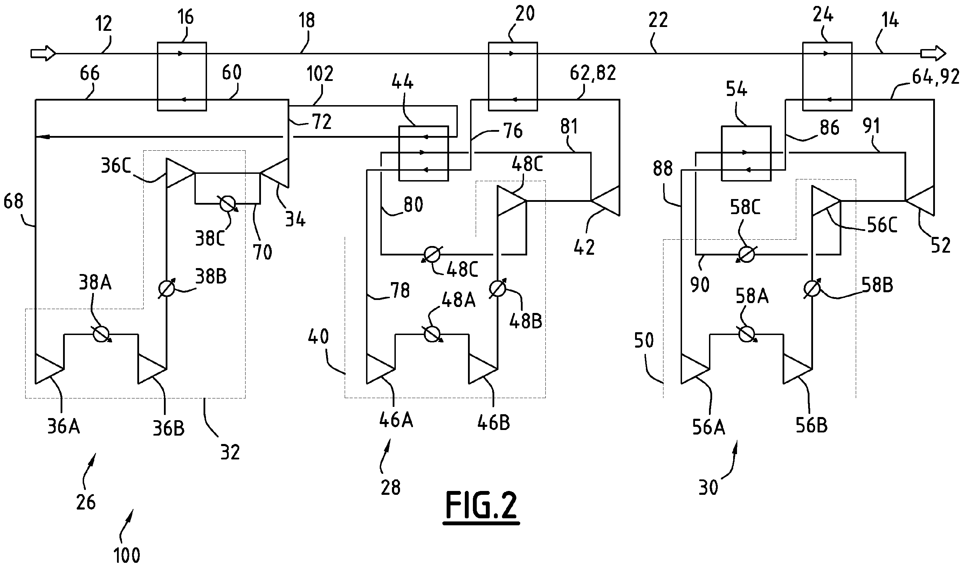

Une deuxième installation 100 selon l'invention est représentée sur la Figure 2. Cette deuxième installation 100 est destinée à la mise en oeuvre d'un deuxième procédé de production selon l'invention.

Le deuxième procédé selon l'invention diffère du premier procédé en ce que le premier courant de réfrigération détendu 72 issu de la première turbine de détente dynamique 34 est séparé en le premier courant de réfrigérant 60 destiné à être convoyé jusqu'au premier échangeur 16 et en un premier courant 102 de refroidissement auxiliaire du deuxième cycle de réfrigération 28.

Le premier courant de réfrigération auxiliaire 102 présente un débit molaire compris entre 0 % et 30 % du débit molaire du premier courant de réfrigération détendu 72.

Le premier courant de réfrigération auxiliaire 102 est introduit dans le deuxième échangeur de cycle 44 du deuxième cycle de réfrigération 28 pour refroidir à contre-courant le deuxième courant de réfrigérant haute pression 80 avant son passage dans la deuxième turbine de détente 42.

A la sortie du deuxième échangeur de cycle 44, le courant 102 est mélangé au premier courant de réfrigérant réchauffé 66 pour former le premier courant réchauffé basse pression 68.

Dans cet exemple, le premier fluide réfrigérant et le deuxième fluide réfrigérant restent totalement séparés, et ne sont pas mélangés l'un à l'autre, notamment dans le deuxième échangeur de cycle 44.

Des exemples de température, de pression et de débit massique des différents courants illustrés dans le procédé de la Figure 2 sont résumés dans les tableaux ci-dessus.

| | | Courant | Cas 2 |
|---|---|---|---|
| Gaz Naturel | | | |
| T Pré-refroidissement | °C | 18 | -40,00 |
| T Liquéfaction | °C | 22 | -90,00 |
| T Sous refroidissement | °C | 14 | -148,10 |

| Réfrigérant cycle 26 | | | |
|---|---|---|---|
| T°C Après Détente | °C | 72, 60, 102 | -42,30 |
| Basse Pression | Bara | 68 | 18,80 |
| Haute Pression | Bara | 70 | 75,00 |
| Débit | kmoles/h | 70 | 81091 |
| Turbine | kW | | 50312 |
| Compresseur | kW | | 50232 |
| Teneur Méthane | %mole | 70 | 87,50 |
| Teneur en C2+ | %mole | 70 | 8,50 |
| Teneur Azote | %mole | 70 | 4,00 |

| Réfrigérant cycle 28 | | | |
|---|---|---|---|
| Pré-refroidissement | °C | 81 | -33,90 |
| T°C Après Détente | °C | 62 | -92,00 |
| Basse Pression | Bara | 78 | 25,15 |
| Haute Pression | Bara | 80 | 75,00 |
| Débit | kmoles/h | 80 | 118107 |
| Turbine | kW | | 37040 |
| Compresseur | kW | | 78811 |
| Teneur Méthane | %mole | 80 | 93,00 |
| Teneur en C2+ | %mole | 80 | 0,50 |
| Teneur Azote | %mole | 80 | 6,50 |

| Réfrigérant cycle 30 | | | |
|---|---|---|---|
| Pré-refroidissement | °C | 91 | -74,00 |
| T°C Après Détente | °C | 64 | -150,30 |
| Basse Pression | Bara | 88 | 12,20 |
| Haute Pression | Bara | 90 | 75,00 |
| Débit | kmoles/h | 90 | 78441 |
| Turbine | kW | | 34640 |
| Compresseur | kW | | 107121 |
| Teneur Méthane | %mole | 90 | 3,00 |
| Teneur Azote | %mole | 90 | 97,00 |

Comme l'illustre le tableau ci-dessous, un gain de 1,8 MW est obtenu par rapport au procédé de la Figure 1 à composition de fluide réfrigérant constante.

| | | Procédé selon la Figure 1 | Procédé selon la Figure 2 |
|---|---|---|---|
| Puissance Cycle 26 | kW | 40610 | 50232 |
| Puissance Cycle 28 | kW | 90299 | 78811 |
| Total des 2 Cycles | kW | 130909 | 129043 |

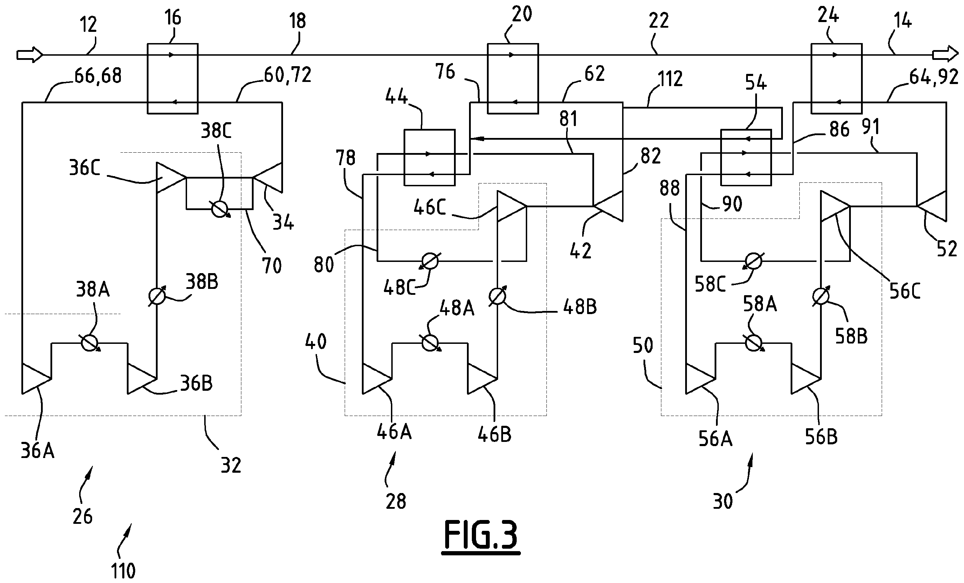

Une troisième installation 110 selon l'invention est représentée sur la Figure 3. Cette troisième installation 110 est destinée à la mise en oeuvre d'un troisième procédé de production selon l'invention.

Le troisième procédé selon l'invention diffère du premier procédé décrit sur la Figure 1 en ce que le deuxième courant de réfrigérant détendu 82 est séparé en le deuxième courant de réfrigération 62 destiné à être introduit dans le deuxième échangeur thermique 20 et en un deuxième courant de réfrigération auxiliaire 112 destiné à fournir des frigories au troisième cycle de réfrigération 30.

Le débit molaire du deuxième courant de réfrigération auxiliaire 112 est inférieure à 25 % du débit molaire du deuxième courant de réfrigération détendu 82 issu de la deuxième turbine de détente 42.

Ce deuxième courant de réfrigération auxiliaire 112 est introduit dans le troisième échangeur de cycle 54 pour refroidir à contre-courant le troisième courant de réfrigération haute pression 90, avant son introduction dans la troisième turbine de détente 52.

Le courant 112, après son passage dans le troisième échangeur 54, est mélangé au deuxième courant de réfrigérant réchauffé 76, avant d'être introduit dans le deuxième échangeur de cycle 44 pour former à la sortie de cet échangeur 44 le deuxième courant de réfrigérant basse pression 78.

Des exemples de température, de pression, et de débit molaire des différents courants illustrés dans le procédé de la Figure 3 sont résumés dans les tableaux ci-dessus.

| | | Courant | Cas 3 |
|---|---|---|---|
| Gaz Naturel | | | |
| T Pré-refroidissement | °C | 18 | -40,00 |
| T Liquéfaction | °C | 22 | -90,00 |
| T Sous refroidissement | °C | 14 | -148,10 |

| Réfrigérant cycle 26 | | | |
|---|---|---|---|
| T°C Après Détente | °C | 60 | -43,00 |
| Basse Pression | Bara | 68 | 18,50 |
| Haute Pression | Bara | 70 | 75,00 |
| Débit | kmoles/h | 70 | 63288 |
| Turbine | kW | | 39657 |
| Compresseur | kW | | 39951 |
| Teneur Méthane | %mole | 70 | 87,50 |
| Teneur en C₂⁺ | %mole | 70 | 8,50 |
| Teneur Azote | %mole | 70 | 4,00 |

| Réfrigérant cycle 28 | | | |
|---|---|---|---|
| Pré-refroidissement | °C | 81 | -27,65 |
| T°C Après Détente | °C | 62, 82, 112 | -92,00 |
| Basse Pression | Bara | 78 | 22,35 |
| Haute Pression | Bara | 80 | 75,00 |
| Débit | kmoles/h | 80 | 139232 |
| Turbine | kW | | 51081 |
| Compresseur | kW | | 101456 |
| Teneur Méthane | %mole | 80 | 93,00 |
| Teneur en C₂⁺ | %mole | 80 | 0,50 |
| Teneur Azote | %mole | 80 | 6,50 |

| Réfrigérant cycle 30 | | | |
|---|---|---|---|
| Pré-refroidissement | °C | 91 | -83,75 |
| T°C Après Détente | °C | 64 | -150,10 |
| Basse Pression | Bara | 88 | 15,25 |
| Haute Pression | Bara | 90 | 75,00 |
| Débit | kmoles/h | 90 | 74474 |
| Turbine | kW | | 26942 |
| Compresseur | kW | | 89667 |
| Teneur Méthane | %mole | 90 | 3,00 |
| Teneur Azote | %mole | 90 | 97,00 |

La consommation énergétique est donnée dans le tableau ci-dessous. Un gain de rendement de 6,5 MW environ est obtenu par cette disposition.

| | | Procédé selon la Figure 1 | Procédé selon la Figure 3 |
|---|---|---|---|
| Puissance Cycle 28 | kW | 90299 | 101456 |
| Puissance Cycle 30 | kW | 107121 | 89667 |
| Total des 2 Cycles | kW | 197420 | 191123 |

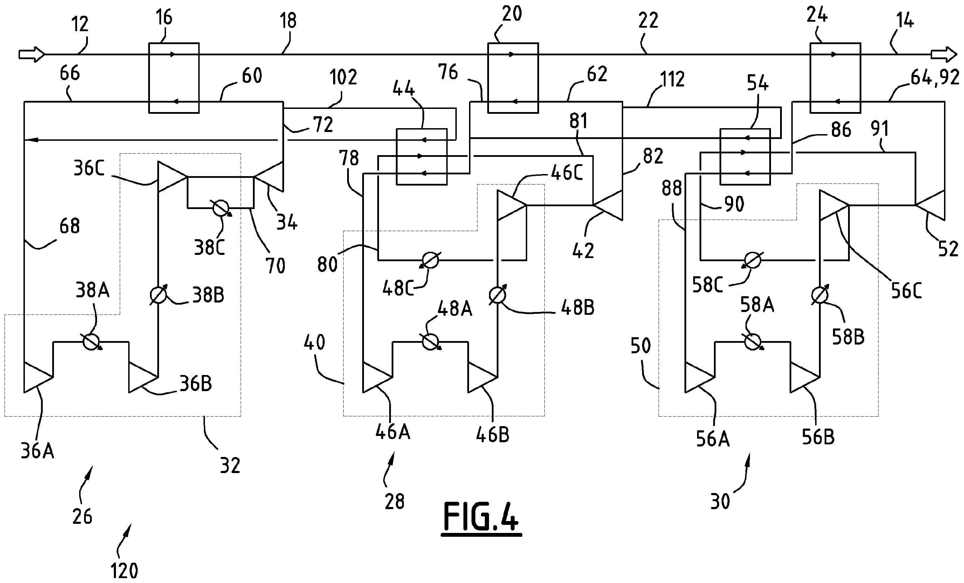

Une quatrième installation 120 selon l'invention est représentée sur la Figure 4. A la différence de la deuxième installation 100, le deuxième courant de réfrigération détendu 82 est divisé en le deuxième courant de réfrigération 62 et en le deuxième courant de réfrigération auxiliaire 112 du troisième cycle 30, comme dans le mode de réalisation de la Figure 3.

Des exemples de température, de pression et de débit massique des différents courants illustrés dans le procédé de la Figure 4 sont résumés dans les tableaux ci-dessous.

| | | Courant | Cas 4 |
|---|---|---|---|
| Gaz Naturel | | | |
| T Pré-refroidissement | °C | 18 | -40,00 |
| T Liquéfaction | °C | 22 | -90,00 |
| T Sous refroidissement | °C | 14 | -148,10 |

| Réfrigérant cycle 26 | | | |
|---|---|---|---|
| T°C Après Détente | °C | 60, 72, 102 | -42,30 |
| Basse Pression | Bara | 68 | 18,80 |
| Haute Pression | Bara | 70 | 75,00 |
| Débit | kmoles/h | 70 | 81091 |
| Turbine | kW | | 50312 |
| Compresseur | kW | | 50237 |
| Teneur Méthane | %mole | 70 | 87,50 |
| Teneur en C₂⁺ | %mole | 70 | 8,50 |
| Teneur Azote | %mole | 70 | 4,00 |

| Réfrigérant cycle 28 | | | |
|---|---|---|---|
| Pré-refroidissement | °C | 81 | -33,05 |
| T°C Après Détente | °C | 62, 82, 112 | -92,00 |
| Basse Pression | Bara | 78 | 24,75 |
| Haute Pression | Bara | 80 | 75,00 |
| Débit | kmoles/h | 80 | 133974 |
| Turbine | kW | | 42973 |
| Compresseur | kW | | 90525 |
| Teneur Méthane | %mole | 80 | 93,00 |
| Teneur en C₂⁺ | %mole | 80 | 0,50 |
| Teneur Azote | %mole | 80 | 6,50 |

| Réfrigérant cycle 30 | | | |
|---|---|---|---|
| Pré-refroidissement | °C | 91 | -84,10 |
| T°C Après Détente | °C | 64 | -150,10 |
| Basse Pression | Bara | 88 | 15,35 |
| Haute Pression | Bara | 90 | 75,00 |
| Débit | kmoles/h | 90 | 74147 |
| Turbine | kW | | 26633 |
| Compresseur | kW | | 88877 |
| Teneur Méthane | %mole | 90 | 3,00 |
| Teneur Azote | %mole | 90 | 97,00 |

La consommation énergétique de ce procédé est inférieure de 8,5 MW environ par rapport au procédé de la Figure 1.

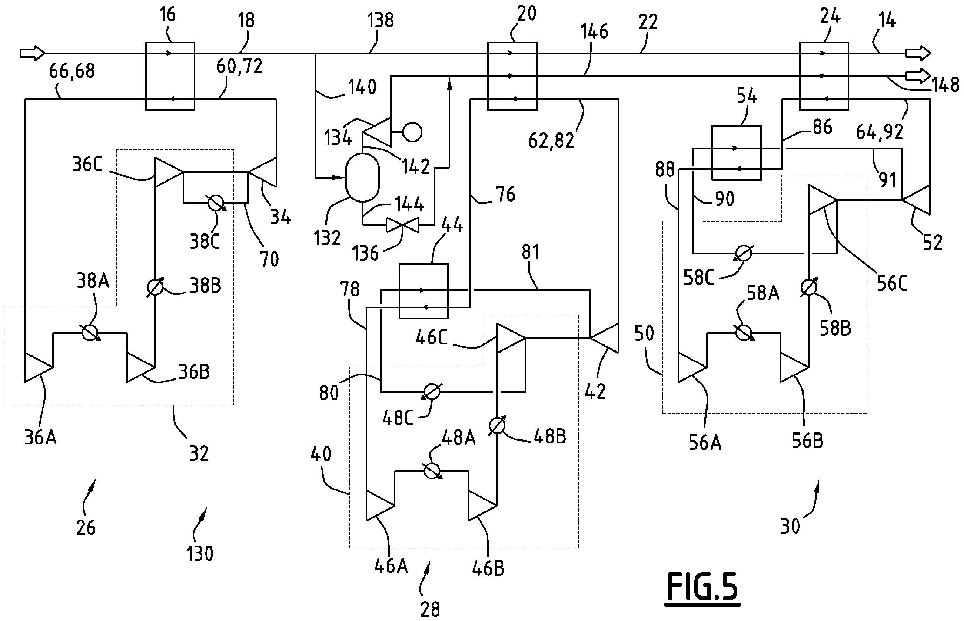

Une cinquième installation 130 selon l'invention est représentée sur la Figure 5.

La cinquième installation 130 selon l'invention diffère de la première installation 10 en ce qu'elle comprend un ballon de séparation 132 d'une partie du courant de charge pré-refroidie 18, une turbine de détente de gaz 134, raccordée à une partie supérieure du ballon 132 et une vanne de détente statique 136, raccordée à une partie inférieure du ballon 132.

Le cinquième procédé selon l'invention diffère du premier procédé selon l'invention en ce que le courant de charge pré-refroidie 18 est séparé à la sortie du premier échangeur thermique 16, en un courant principal 138 de charge pré-refroidie et en un courant auxiliaire 140 de charge pré-refroidie.

Le courant principal de charge pré-refroidie 138 est envoyé vers le deuxième échangeur thermique 20 pour former un courant de GNL 22 haute pression, puis après passage dans le troisième échangeur 24, un courant de GNL sous-refroidi 14 haute pression à une pression supérieure à 30 bars et notamment environ égale à 62 bars.

Le courant auxiliaire de charge pré-refroidie 140 est introduit dans le ballon séparateur 132. La fraction vapeur 142 issue du ballon séparateur 132 est introduite dans la turbine de détente gazeuse 134 pour être détendue à une pression inférieure d'au moins 5 bars à la pression de départ, et notamment sensiblement égale à 40 bars.

La fraction liquide 144 est introduite dans la vanne de détente statique 136 pour être détendue à une pression sensiblement identique à celle de sortie de la turbine de détente et notamment sensiblement égale à 40 bars.

Les fractions 144, 142, après leurs détentes respectives, sont réunies entre elles puis sont introduites dans le deuxième échangeur thermique 20. Elles forment, à la sortie du deuxième échangeur 20, un courant 146 auxiliaire de GNL basse pression qui est sous refroidi dans le troisième échangeur thermique 24 pour former un courant auxiliaire 148 de GNL sous refroidi. La température du courant auxiliaire 148 est sensiblement égale à celle du courant principal 14.

Le procédé délivre donc deux courants de GNL sous refroidi 14, 148 à des pressions distinctes différentes d'au moins 5 bars.

Des exemples de température, de pression et de débit massique des différents courants illustrés dans le procédé de la Figure 5 sont résumés dans les tableaux ci-dessous.

| | | Courant | Figure 5 |
|---|---|---|---|
| Gaz Naturel | | | |
| T Pré-refroidissement | °C | 18 | -40,00 |
| T Liquéfaction | °C | 22 | -94,00 |
| T Sous refroidissement | °C | 14 | -148,10 |

| Réfrigérant cycle 26 | | | |
|---|---|---|---|
| T°C Après Détente | °C | 60 | -42,30 |
| Basse Pression | Bara | 68 | 18,80 |
| Haute Pression | Bara | 70 | 75,00 |
| Débit | kmoles/h | 70 | 83141 |
| Turbine | kW | | 51584 |
| Compresseur | kW | | 51499 |
| Teneur Méthane | %mole | 70 | 87,50 |
| Teneur en C₂⁺ | %mole | 70 | 8,50 |
| Teneur Azote | %mole | 70 | 4,00 |

| Réfrigérant cycle 28 | | | |
|---|---|---|---|
| Pré-refroidissement | °C | 81 | -34,10 |
| T°C Après Détente | °C | 62 | -96,00 |
| Basse Pression | Bara | 78 | 23,15 |
| Haute Pression | Bara | 80 | 75,00 |
| Débit | kmoles/h | 80 | 137986 |
| Turbine | kW | | 46005 |
| Compresseur | kW | | 100381 |
| Teneur Méthane | %mole | 80 | 93,00 |
| Teneur en C₂⁺ | %mole | 80 | 0,50 |
| Teneur Azote | %mole | 80 | 6,50 |

| Réfrigérant cycle 30 | | | |
|---|---|---|---|
| Pré-refroidissement | °C | 91 | -92,85 |
| T°C Après Détente | °C | 64 | -150,10 |
| Basse Pression | Bara | 88 | 18,50 |
| Haute Pression | Bara | 90 | 75,00 |
| Débit | kmoles/h | 90 | 69200 |
| Turbine | kW | | 20207 |
| Compresseur | kW | | 74057 |
| Teneur Méthane | %mole | 90 | 3,00 |
| Teneur Azote | %mole | 90 | 97,00 |

La consommation énergétique de ce procédé est donnée dans le tableau ci-dessous. Un gain de plus de 1MW est obtenu par rapport au procédé de la Figure 4, sans compter les 600 kW d'électricité produits par la turbine 134.

| | | Procédé selon la Figure 4 | Procédé selon la Figure 5 |
|---|---|---|---|
| Puissance Cycle 26 | kW | 50237 | 46470 |
| Puissance Cycle 28 | kW | 90525 | 92740 |
| Puissance Cycle 30 | kW | 88877 | 89310 |
| Total | kW | 229639 | 228520 |

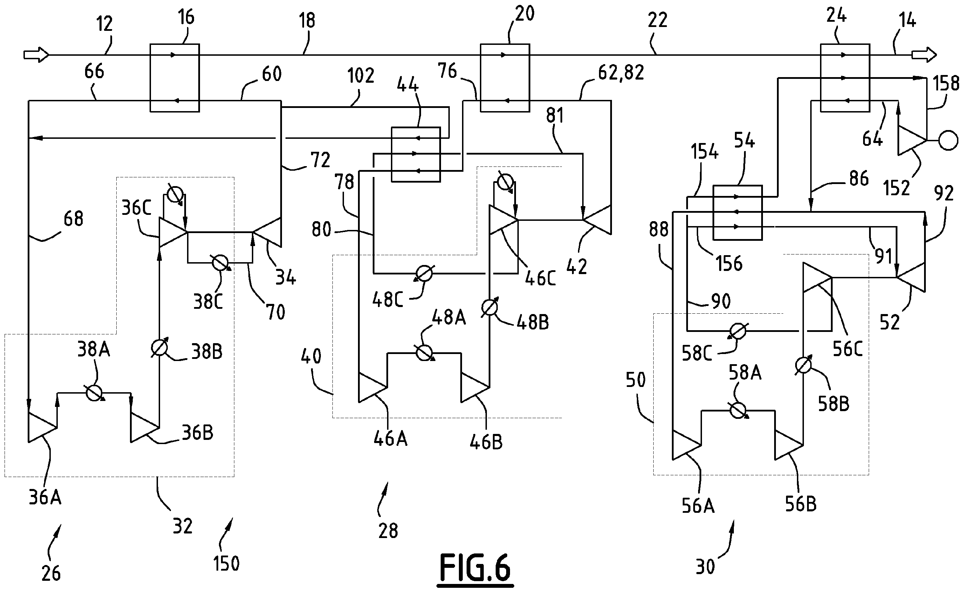

Une sixième installation 150 selon l'invention est représentée sur la Figure 6. Cette sixième installation est destinée à la mise en oeuvre d'un sixième procédé selon l'invention.

La sixième installation 150 diffère de la deuxième installation 100 en ce que le troisième cycle de réfrigération 30 est un cycle de type « Brayton inversé indirect » qui comprend une turbine de détente de liquide 152.

Le sixième procédé selon l'invention diffère du deuxième procédé selon l'invention en ce que le troisième courant de réfrigérant comprimé 90 est séparé, avant son passage dans le troisième échangeur de cycle 54, en un courant 154 de formation du troisième courant de réfrigérant 66 et en un courant gazeux 156 de réfrigération du courant de formation 154.

Le courant de formation 154 forme une fraction molaire inférieure à 50% du courant de réfrigérant comprimé 90.

Le courant 154 est introduit dans le troisième échangeur de cycle 54, puis dans le troisième échangeur thermique 24 afin de se liquéfier sensiblement totalement pour produire un courant liquide 158 de réfrigérant haute pression.

La fraction volumique de liquide dans le courant liquide 158 est supérieure à 99%. Ce courant 158 est introduit dans la turbine de détente de liquide 152 à une pression supérieure à 50 bars sensiblement égale à 73 bars et à une température sensiblement égale à la température du GNL sous refroidi.

Le courant 158 forme, après passage dans la turbine de détente de liquide 152, le troisième courant de réfrigérant dont la fraction vaporisée n'excède pas 10% en masse.

Ce courant 64 est placé en relation d'échange thermique avec le courant de GNL 22 et avec le courant 154 issu du troisième échangeur de cycle 54 dans le troisième échangeur thermique 24.

Le troisième courant de réfrigérant 64 majoritairement liquide se vaporise sensiblement totalement dans le troisième échangeur thermique 24, de sorte que sa fraction volumique de liquide à la sortie du troisième échangeur thermique 24 est inférieure à 1 % pour former le troisième courant de réfrigérant gazeux réchauffé 86.

Le courant gazeux 156 est introduit dans le troisième échangeur de cycle 54 pour former le troisième courant 91 comprimé refroidi, puis est détendu dynamiquement dans la troisième turbine de détente dynamique 52 pour former un courant gazeux 92 de réfrigérant détendu refroidi.

La température du courant 92 est de préférence inférieure à -100 °C et est notamment égale à -118°C. Sa pression est de préférence inférieure à 20 bars, et est notamment égale à environ 14 bars.

Les courants 66, 92 sont mélangés entre eux avant d'être introduits dans l'échangeur 54 pour refroidir à contre-courant le courant de formation 154 destiné à être liquéfié et le courant 156 de réfrigération.

Ce mélange 161 forme, en sortie du troisième échangeur de cycle 54, le troisième courant de réfrigérant basse pression 88.

Ainsi, le courant de formation 154, et par suite le troisième courant de réfrigérant 64 sont obtenus au moins en partie à partir du courant gazeux détendu 92 issu de la détente dynamique dans la troisième turbine de détente 52.

En outre les frigories nécessaires à la liquéfaction du courant de formation 154 sont fournies en majorité par le courant gazeux détendu 92. Un cycle de réfrigération de type Brayton inversé, avec un réfrigérant gazeux est formé entre la turbine 52, le courant 92, le courant 161, le courant 88, le troisième appareil de compression 50, le courant 90, le courant 156 et le courant 91.

Des exemples de température, de pression et de débit massique des différents courants illustrés dans le procédé de la Figure 6 sont résumés dans les tableaux ci-dessous.

| | | Courant | Cas 6 |
|---|---|---|---|
| Gaz Naturel | | | |
| T Pré-refroidissement | °C | 18 | -40,00 |
| T Liquéfaction | °C | 22 | -110,00 |
| T Sous refroidissement | °C | 14 | -148,10 |

| Réfrigérant cycle 26 | | | |
|---|---|---|---|
| T°C Après Détente | °C | 60 | -45,30 |
| Basse Pression | Bara | 68 | 17,40 |
| Haute Pression | Bara | 70 | 75,00 |
| Débit | kmoles/h | 70 | 96500 |
| Turbine | kW | | 62735 |
| Compresseur | kW | | 62366 |
| Teneur Méthane | %mole | 70 | 87,50 |
| Teneur en C₂⁺ | %mole | 70 | 8,50 |
| Teneur Azote | %mole | 70 | 4,00 |

| Réfrigérant cycle 28 | | | |
|---|---|---|---|
| Pré-refroidissement | °C | 81 | -40,00 |
| T°C Après Détente | °C | 62 | -113,10 |
| Basse Pression | Bara | 78 | 17,60 |
| Haute Pression | Bara | 80 | 75,00 |
| Débit | kmoles/h | 80 | 102000 |
| Turbine | kW | | 38693 |
| Compresseur | kW | | 95067 |
| Teneur Méthane | %mole | 80 | 90,00 |
| Teneur en C₂⁺ | %mole | 80 | 0,00 |
| Teneur Azote | %mole | 80 | 10,00 |

| Réfrigérant cycle 30 | | | |
|---|---|---|---|
| Pré-refroidissement | °C | 91 | -110,00 |
| T°C Après Détente | °C | 92 | -150,20 |
| T Après Liquéfaction | °C | 158 | -148.1 |
| T Après Détente liquide | °C | 64 | -150.2 |
| Basse Pression | Bara | 88 | 13,50 |
| Haute Pression | Bara | 90 | 75,00 |
| Débit | kmoles/h | 90 | 52000 |
| Turbine | kW | | 16696 |
| Compresseur | kW | | 68771 |
| Teneur Méthane | %mole | 90 | 60,00 |
| Teneur Azote | %mole | 90 | 40,00 |

La consommation énergétique de ce procédé est de 226 MW.

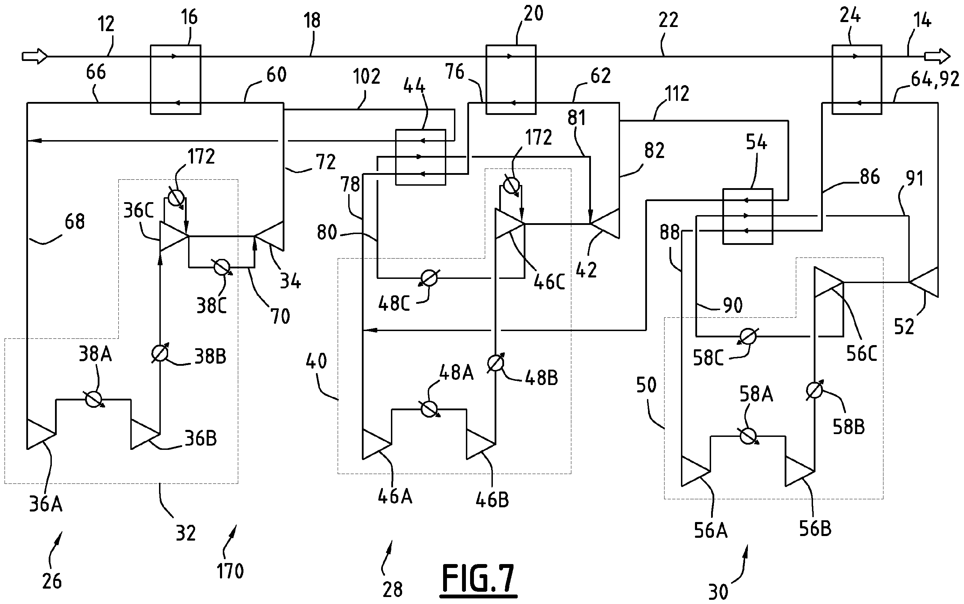

Une septième installation selon l'invention 170 est représentée sur la Figure 7. Cette installation 170 est destinée à la mise en oeuvre d'un septième procédé selon l'invention.

L'installation 170 diffère de la troisième installation 110 représentée sur la Figure 3 en ce que les compresseurs 36C, 46C attelés respectivement à la première turbine de détente dynamique 34 et à la deuxième turbine de détente dynamique 42 sont formés chacun par deux étages de compression de même puissance, les étages étant séparés par un réfrigérant intermédiaire 172 refroidissant le gaz à une température avantageusement inférieure à 40°C et par exemple sensiblement égale à 36°C.

En outre, le septième procédé selon l'invention diffère du troisième procédé selon l'invention en ce que le deuxième courant de réfrigération auxiliaire 112, après son passage dans le troisième échangeur de cycle 54 est mélangé au deuxième courant de réfrigérant réchauffé 76, après le passage de ce courant 76 dans le deuxième échangeur de cycle 44. Ainsi, le deuxième courant de réfrigération auxiliaire 112 ne passe pas par le deuxième échangeur de cycle 44.

Les exemples de température, de pression et de débit massique des différents courants illustrés dans le procédé de la Figure 7 pour différentes températures à la sortie des échangeurs 16, 20, 24 sont résumés dans le tableau ci-dessous.

| | | Courant | Cas 7-1 | Cas 7-2 | Cas 7-3 |
|---|---|---|---|---|---|
| Gaz Naturel | | | | | |
| T Pré-refroidissement | °C | 18 | -40,00 | -35,50 | -31,00 |
| T Liquéfaction | °C | 22 | -90,00 | -98,50 | -107,00 |
| T Sous refroidissement | °C | 14 | -148,10 | -148,10 | -148,10 |

| Réfrigérant cycle 26 | | | | | |
|---|---|---|---|---|---|
| T°C Après Détente | °C | 60 | -45,60 | -42,30 | -36,15 |
| Basse Pression | Bara | 68 | 17,30 | 18,80 | 21,90 |
| Haute Pression | Bara | 70 | 75,00 | 75,00 | 75,00 |
| Débit | kmoles/h | 70 | 111100 | 81940 | 98260 |
| Turbine | kW | | 72490 | 50840 | 55100 |
| Compresseur | kW | | 71900 | 49510 | 50830 |
| Teneur Méthane | %mole | 70 | 87,50 | 87,50 | 87,50 |
| Teneur en C₂⁺ | %mole | 70 | 8,50 | 8,50 | 8,50 |
| Teneur Azote | %mole | 70 | 4,00 | 4,00 | 4,00 |

| Réfrigérant cycle 28 | | | | | |
|---|---|---|---|---|---|
| Pré-refroidissement | °C | 81 | -40,00 | -31,00 | -31,00 |
| T°C Après Détente | °C | 62 | -93,10 | -101,00 | -108,00 |
| Basse Pression | Bara | 78 | 27,50 | 19,50 | 16,50 |
| Haute Pression | Bara | 80 | 75,00 | 75,00 | 75,00 |
| Débit | kmoles/h | 80 | 123700 | 124400 | 120200 |
| Turbine | kW | | 33320 | 48260 | 51410 |
| Compresseur | kW | | 75900 | 103200 | 113700 |
| Teneur Méthane | %mole | 80 | 93,00 | 93,00 | 93,00 |
| Teneur en C₂⁺ | %mole | 80 | 0,50 | 0,50 | 0,50 |
| Teneur Azote | %mole | 80 | 6,50 | 6,50 | 6,50 |

| Réfrigérant cycle 30 | | | | | |
|---|---|---|---|---|---|
| Pré-refroidissement | °C | 91 | -90,00 | -96,00 | -100,00 |
| T°C Après Détente | °C | 64 | -150,20 | -149.7 | -151,60 |
| Basse Pression | Bara | 88 | 17,40 | 20,00 | 20,50 |
| Haute Pression | Bara | 90 | 75,00 | 75,00 | 75,00 |
| Débit | kmoles/h | 90 | 70370 | 67200 | 57300 |
| Turbine | kW | | 22080 | 17920 | 14120 |
| Compresseur | kW | | 76390 | 67020 | 57020 |
| Teneur Méthane | %mole | 90 | 3,00 | 3,00 | 3,00 |
| Teneur Azote | %mole | 90 | 97,00 | 97,00 | 97,00 |

Les consommations énergétiques de ces procédés sont données dans le tableau ci-dessous :

| | | Cas 7-1 | Cas 7-2 | Cas 7-3 |
|---|---|---|---|---|
| Total Compression | kW | 224190 | 219730 | 221550 |

Dans une variante (cas 7-4), lorsque du dioxyde de carbone est disponible dans l'installation 10, par exemple en étant produit dans l'installation par décarbonatation du gaz naturel brut, il est avantageux d'en introduire au moins 10 %, avantageusement au moins 18 %, dans le premier fluide réfrigérant. Dans une variante du cas 7-2, le premier fluide réfrigérant comprend environ 20% de dioxyde de carbone. La teneur en CO2 doit être limitée à moins de 50% molaire pour éviter la cristallisation du CO2 dans la turbine de détente.

La consommation énergétique du premier cycle 26 de cette dernière variante est donnée dans le tableau ci-dessous en comparaison avec le cas 7-2 ci-dessus. La présence de dioxyde de carbone améliore grandement le rendement.

| Cycle 26 | | Cas 7-2 | Cas 7-4 |
|---|---|---|---|
| Teneur en N2 du réfrigérant 1 | %mole | 4.0 | 3.2 |
| Teneur en C1 du réfrigérant 1 | %mole | 87.5 | 70 |
| Teneur en C₂⁺ du réfrigérant 1 | %mole | 8.5 | 6.8 |
| Teneur en CO₂ du réfrigérant 1 | %mole | 0.0 | 20 |
| Puissance des compresseurs K1 et K2 | kW | 50840 | 46610 |

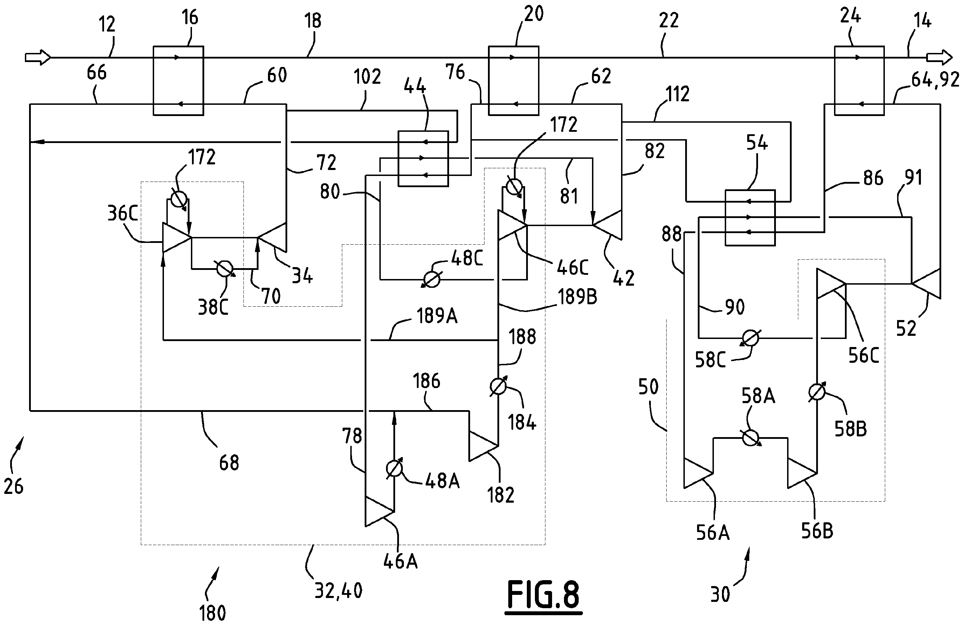

Une huitième installation selon l'invention 180 est représentée sur la Figure 8. Cette huitième installation est destinée à la mise en oeuvre d'un huitième procédé selon l'invention.

Cette installation 180 diffère de la troisième installation 110 en ce qu'au moins un premier compresseur 182 est commun au premier appareil de compression 32 et au deuxième appareil de compression 40 pour comprimer simultanément le premier fluide réfrigérant circulant dans le premier cycle de réfrigération 26, et le deuxième fluide réfrigérant circulant dans le deuxième cycle de réfrigération 28, ces fluides étant mélangés avant leur passage dans le premier compresseur commun 182.

L'installation 180 comprend en outre un réfrigérant commun 184 placé à la sortie du compresseur commun 182.

Le premier appareil de compression 32 comprend ainsi le compresseur 182 commun aux deux appareils 32, 40 et le compresseur 36C attelé à la première turbine de détente 34.

Le deuxième appareil de compression 40 comprend, en amont du compresseur commun 182, un compresseur 46A, et en aval du compresseur commun 182, le compresseur 46C de préférence attelé à la deuxième turbine de détente 42.

Dans le huitième procédé, le deuxième courant basse pression 78 issu du deuxième échangeur de cycle 44 est introduit dans le premier compresseur 46A du deuxième appareil de compression 40.

A la sortie du compresseur 46A, ce courant 78 est mélangé au premier courant basse pression 68 pour former un courant 186 de mélange à pression intermédiaire supérieure à 20 bars et inférieure à 30 bars.

Le courant de mélange à pression intermédiaire 186 est alors introduit dans le compresseur commun 182 pour former un courant de mélange moyenne pression 188, après passage dans le réfrigérant commun 184.

Ce courant 188 présente une pression supérieure à 35 bars et inférieure à 50 bars.

Le courant 188 est alors divisé en un premier courant intermédiaire 189A de réfrigérant qui est convoyé dans le compresseur 36C de préférence attelé à la première turbine de détente 34, pour former le premier courant de réfrigérant comprimé 70, et en un deuxième courant intermédiaire 189B de réfrigérant qui est introduit dans le compresseur 46C du deuxième appareil de compression 40 de préférence attelé à la deuxième turbine de détente 42, pour former le deuxième courant de réfrigérant comprimé 82.

Des exemples de température, de pression et de débit molaire des différents courants illustrés dans le procédé de la Figure 8 sont résumés dans les tableaux ci-dessus.

| | | Courant | Cas 8 |
|---|---|---|---|
| Gaz Naturel | | | |
| T Pré-refroidissement | °C | 18 | -30,00 |
| T Liquéfaction | °C | 22 | -120,00 |
| T Sous refroidissement | °C | 14 | -148,10 |

| Réfrigérant cycle 26 | | | |
|---|---|---|---|
| T°C Après Détente | °C | 60 | -35,00 |
| Basse Pression | Bara | 68 | 24,00 |
| Haute Pression | Bara | 70 | 76,50 |
| Débit | kmoles/h | 70 | 98000 |
| Turbine | kW | | 53726 |
| Teneur Méthane | %mole | 70 | 90,00 |
| Teneur en C₂⁺ | %mole | 70 | 0,00 |
| Teneur Azote | %mole | 70 | 10,00 |

| Réfrigérant cycle 28 | | | |
|---|---|---|---|
| Pré-refroidissement | °C | 81 | -30,50 |
| T°C Après Détente | °C | 62 | -123,20 |
| Basse Pression | Bara | 78 | 11,00 |
| Haute Pression | Bara | 80 | 75,00 |
| Débit | kmoles/h | 80 | 108000 |
| Turbine | kW | | 57275 |
| Compresseurs cycles 26 +28 | kW | | 183 545 |
| Teneur Méthane | %mole | 80 | 90,00 |
| Teneur en C₂⁺ | %mole | 80 | 0,00 |
| Teneur Azote | %mole | 80 | 10,00 |

| Réfrigérant cycle 30 | | | |
|---|---|---|---|
| Pré-refroidissement | °C | 91 | -98,60 |
| T°C Après Détente | °C | 64 | -163,10 |
| Basse Pression | Bara | 88 | 14,00 |
| Haute Pression | Bara | 90 | 75,00 |
| Débit | kmoles/h | 90 | 42000 |
| Turbine | kW | | 13198 |
| Compresseur | kW | | 56818 |
| Teneur Méthane | %mole | 90 | 0,00 |
| Teneur Azote | %mole | 90 | 100,00 |

Ce procédé et l'installation 180 correspondante sont particulièrement compacts.

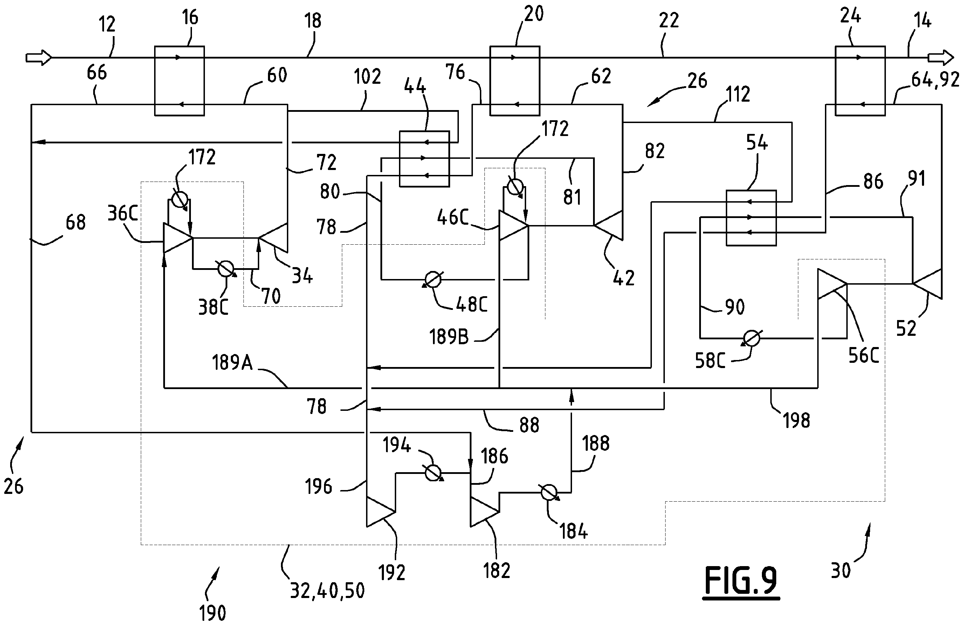

Une neuvième installation 190 selon l'invention est illustrée sur la Figure 9. L'installation 190 est destinée à la mise en oeuvre d'un neuvième procédé selon l'invention.

A la différence de la huitième installation 180, le premier compresseur commun 182 au premier appareil de compression 32 et au deuxième appareil de compression 40 est également commun au troisième appareil de compression 50.

En outre, le compresseur basse pression 192 du deuxième appareil de compression 40 est commun au troisième appareil de compression 50. Le réfrigérant basse pression 194 placé à la sortie du compresseur 192 est également commun au deuxième appareil de compression 40 et au troisième appareil de compression 50.

Ainsi, le troisième appareil de compression 50 comprend successivement le compresseur basse pression 192, commun au deuxième appareil de compression 40 et au troisième appareil de compression 50, le compresseur 182 commun aux trois appareils de compression 32, 40, 50, et le compresseur 56C de préférence attelé à la troisième turbine de détente 52.

Dans le neuvième procédé selon l'invention, le deuxième courant de réfrigérant basse pression 78 et le troisième courant de réfrigérant basse pression 88, issus respectivement du deuxième échangeur de cycle 44 et du troisième échangeur de cycle 54, sont mélangés l'un à l'autre pour former un courant de mélange basse pression 196.

Le courant de mélange basse pression 196 est introduit dans le compresseur 192 commun au deuxième appareil 40 et au troisième appareil 50, puis dans le réfrigérant commun 194.

Il est ensuite mélangé au premier courant de réfrigérant basse pression 68 pour former le courant de mélange 186 introduit dans le premier compresseur commun 182.

Le courant de mélange 188 moyenne pression issu du réfrigérant commun 184 est ensuite divisé en le premier courant intermédiaire 189A, en le deuxième courant intermédiaire 189B et en un troisième courant intermédiaire 198 qui est introduit dans le compresseur 56C de préférence attelé à la troisième turbine de détente 52 pour former le troisième courant de réfrigération comprimé 90.

Des exemples de température, de pression et de débit molaire des différents courants illustrés dans le procédé de la Figure 9 sont résumés dans les tableaux ci-dessus.

| | | Courant | Cas 9 |
|---|---|---|---|
| Gaz Naturel | | | |
| T Pré-refroidissement | °C | 18 | -31,00 |
| T Liquéfaction | °C | 22 | -107,00 |
| T Sous refroidissement | °C | 14 | -148,10 |

| Réfrigérant cycle 26 | | | |
|---|---|---|---|
| T°C Après Détente | °C | 60 | -36,60 |
| Basse Pression | Bara | 68 | 25,20 |
| Haute Pression | Bara | 70 | 74,10 |
| Débit | kmoles/h | 70 | 96000 |
| Turbine | kW | | 52750 |
| Compresseur | kW | | - |
| Teneur Méthane | %mole | 70 | 0,00 |
| Teneur en C₂⁺ | %mole | 70 | 0,00 |
| Teneur Azote | %mole | 70 | 100,00 |

| Réfrigérant cycle 28 | | | |
|---|---|---|---|
| Pré-refroidissement | °C | 81 | -30,00 |
| T°C Après Détente | °C | 62 | -109,50 |
| Basse Pression | Bara | 78 | 15,60 |
| Haute Pression | Bara | 80 | 73,70 |
| Débit | kmoles/h | 80 | 155500 |
| Turbine | kW | | 84538 |
| Compresseur | kW | | - |
| Teneur Méthane | %mole | 80 | 0,00 |
| Teneur en C₂⁺ | %mole | 80 | 0,00 |
| Teneur Azote | %mole | 80 | 100,00 |

| Réfrigérant cycle 30 | | | |
|---|---|---|---|
| Pré-refroidissement | °C | 91 | -105,00 |
| T°C Après Détente | °C | 64 | -153,40 |
| Basse Pression | Bara | 88 | 15,60 |
| Haute Pression | Bara | 90 | 54,20 |
| Débit | kmoles/h | 90 | 61500 |
| Turbine | kW | | 15615 |
| Compresseurs cycles 26 + 28 + 30 | kW | | 252952 |
| Teneur Méthane | %mole | 90 | 0,00 |
| Teneur Azote | %mole | 90 | 100,00 |

De même, la disposition décrite dans la cinquième installation 130 selon laquelle le courant de charge pré-refroidi 18 est séparé pour être introduit en partie dans un ballon 132, peut être disposée dans l'une quelconque des installations 10, 100, 110, 120, 150, 170, 180, 190 décrites précédemment.

Les installations selon l'invention, décrites ci-dessus sont disposées à terre, ou avantageusement sur une structure flottante ou sur une structure fixée à la surface d'une étendue d'eau, telle qu'une plateforme ou une unité flottante de récupération, de stockage et de traitement des hydrocarbures désignée par l'acronyme anglais «FPSO».

Les échangeurs de chaleur 16, 20, 22 dans lesquels circulent le courant de charge 12, le courant de charge pré-refroidie 18, le courant de gaz naturel liquéfié 22 et le courant de GNL sous-refroidi 14, dans les installations 10, 100, 110, 120, 130, 150, 170, 180 et 190, sont de préférence à tubes et calandre présentant des sections de tube droit (type classique) ou enroulées en hélice (type bobiné). Ces échangeurs sont traversés par les courants de gaz naturel qui peuvent contenir des impuretés de nature à altérer le bon fonctionnement ou l'intégrité mécanique des échangeurs. Les échangeurs à tubes et calandre sont plus robustes que les échangeurs à plaques et augmentent la fiabilité de l'installation et sa sécurité pour réaliser ces échangeurs. Pour réaliser ces échangeurs, l'acier inoxydable austénitique, par exemple ASTM 304, est préféré aux alliages à base d'aluminium.

Dans les installations 10, 100, 110, 120, 170, 180 et 190, dans lesquelles les échangeurs précités ne comportent que deux fluides, ces échangeurs sont à tubes et calandre de type classique, en acier inoxydable austénitique de type ASTM 304, fabriqués selon les normes publiées par l'organisme Thermal Exchanger Manufacturing Association ou « TEMA ».

## Revendications

1. Procédé de production d'un courant (14) de gaz naturel liquéfié sous-refroidi à partir d'un courant (12) de charge de gaz naturel, du type comprenant les étapes suivantes :
- pré-refroidissement du courant de charge (12) de gaz naturel par passage à travers un premier échangeur thermique (16) pour obtenir un courant (18) de charge pré-refroidie à une température inférieure à - 20°C ;
- liquéfaction du courant de charge pré-refroidie (18) par passage à travers un deuxième échangeur thermique (20) pour obtenir au moins un courant (22) de gaz naturel liquéfié à une température inférieure à - 80°C ;
- sous-refroidissement du courant de gaz naturel liquéfié (22) par passage à travers un troisième échangeur thermique (24) pour obtenir un courant (14) de gaz naturel liquéfié sous-refroidi jusqu'à une température inférieure à -120°C ;
- mise en relation d'échange thermique du courant de charge (12) dans le premier échangeur thermique (16) avec un premier courant (60) de réfrigérant
- mise en relation d'échange thermique du courant de charge pré-refroidie (18) dans le deuxième échangeur thermique (20) avec un deuxième courant (62) de réfrigérant gazeux circulant dans un deuxième cycle (28) de réfrigération, le deuxième courant de réfrigérant gazeux (62) étant produit à partir d'un deuxième courant gazeux (82) de fluide détendu provenant d'une deuxième turbine (42) de détente dynamique
- mise en relation d'échange thermique du courant de gaz naturel liquéfié (22) dans le troisième échangeur thermique (24) avec un troisième courant (64) de réfrigérant circulant dans un troisième cycle (30) de réfrigération, le troisième courant de réfrigérant (64) étant produit au moins partiellement à partir d'un troisième courant gazeux (92) de fluide détendu issu d'une troisième turbine (52) de détente dynamique distincte de la deuxième turbine de détente dynamique (42);
- convoyage du premier courant (66) de réfrigérant réchauffé obtenu à la sortie du premier échangeur thermique (16) vers un premier appareil de compression (26) sans passer par le deuxième échangeur thermique (20) et sans passer par le troisième échangeur thermique (24) ;
- convoyage du deuxième courant (76) de réfrigérant réchauffé issu du deuxième échangeur thermique (20) vers un deuxième appareil de compression (40), sans passer par le premier échangeur thermique (16) et sans passer par le troisième échangeur thermique (24);
- convoyage du troisième courant (86) de réfrigérant réchauffé issu du troisième échangeur thermique (24) vers un troisième appareil de compression (30), sans passer par le premier échangeur thermique (16) et sans passer par le deuxième échangeur thermique (24),
**caractérisé en ce que** le premier courant de réfrigérant est un courant essentiellement gazeux, ce courant étant produit dans un premier cycle (26) de réfrigération à partir d'un premier courant (72) gazeux de fluide réfrigérant détendu issu d'une première turbine (34) de détente dynamique, la deuxième turbine de détente dynamique étant distincte de la première turbine de détente dynamique (34), la troisième turbine (52) de détente dynamique étant distincte de la première turbine de détente dynamique (34), et **en ce que** le premier échangeur thermique ne comporte que deux fluides.

2. Procédé selon la revendication 1, **caractérisé en ce qu'**il comprend les étapes suivantes :
- séparation du premier courant gazeux de fluide réfrigérant détendu (72) en le premier courant de réfrigérant gazeux (60) et en un premier courant de refroidissement auxiliaire (102) ;
- mise en relation d'échange thermique du premier courant de refroidissement auxiliaire (102) dans un deuxième échangeur de cycle (44) avec un deuxième courant de réfrigérant compressé (80) issu du deuxième appareil de compression (40) pour former un deuxième courant de réfrigérant compressé refroidi (81),
- convoyage du deuxième courant de réfrigérant compressé refroidi (81) vers la deuxième turbine de détente (42) pour former le deuxième courant gazeux de fluide réfrigérant détendu (82).

3. Procédé selon l'une des revendications 1 ou 2, **caractérisé en ce qu'**il comprend les étapes suivantes:
- séparation du deuxième courant gazeux de fluide réfrigérant détendu (82) en le deuxième courant de réfrigérant gazeux (62) et en un deuxième courant (112) de refroidissement auxiliaire, et
- mise en relation d'échange thermique du deuxième courant de refroidissement auxiliaire (112) dans un troisième échangeur de cycle avec un troisième courant (90) de réfrigérant comprimé issu du troisième appareil de compression (50) pour former un troisième courant de réfrigérant compressé refroidi (91),
- convoyage du troisième courant de réfrigérant compressé refroidi (91) vers la troisième turbine de détente (52) pour former le troisième courant gazeux de fluide réfrigérant détendu (92).

4. Procédé selon l'une quelconque des revendications précédentes, **caractérisé en ce que** les fluides réfrigérants circulant respectivement dans le premier cycle de réfrigération (26), dans le deuxième cycle de réfrigération (28) et dans le troisième cycle de réfrigération (30) sont totalement séparés,
le premier courant de réfrigérant réchauffé (66) issu du premier échangeur thermique (16), le deuxième courant de réfrigérant réchauffé (76) issu du deuxième échangeur thermique (20), et le troisième courant de réfrigérant réchauffé (86) issu du troisième échangeur thermique (24) étant convoyés respectivement vers des compresseurs distincts respectivement du premier appareil de compression (32), du deuxième appareil de compression (40) et du troisième appareil de compression (50) pour être comprimés séparément les uns des autres.

5. Procédé selon l'une quelconque des revendications 1 à 3, **caractérisé en ce qu'**il comprend les étapes suivantes :
- formation d'au moins un courant de mélange (186 ; 196) à partir d'au moins deux parmi le premier courant de réfrigérant réchauffé (66), le deuxième courant de réfrigérant réchauffé (76), et le troisième courant de réfrigérant réchauffé (86),
- compression du ou de chaque courant de mélange (186 ; 196) dans un compresseur commun (182 ; 192) à au moins deux du premier appareil de compression (32), du deuxième appareil de compression (40), et du troisième appareil de compression (50).

6. Procédé selon l'une quelconque des revendications précédentes, **caractérisé en ce que** le troisième courant de réfrigérant (64) est essentiellement gazeux avant son introduction dans le troisième échangeur thermique (24).

7. Procédé selon l'une quelconque des revendications 1 à 5, **caractérisé en ce qu'**il comprend les étapes suivantes :
- séparation du courant de réfrigérant comprimé (90) issu du troisième appareil de compression (50) en un courant (154) de formation du troisième courant de réfrigérant (64) et en un courant gazeux (156) de réfrigération du courant de formation (154),
- convoyage du courant gazeux de refroidissement (156) vers la troisième turbine de détente (52), et mise en relation d'échange thermique du courant gazeux de refroidissement détendu (92) issu de la troisième turbine de détente (52) avec le courant de formation (154) pour liquéfier le courant de formation (154),
- convoyage du courant de formation liquéfié (154) vers une turbine de détente hydraulique (152) pour former le troisième courant de réfrigérant (64) sous forme essentiellement liquide,
- mise en relation d'échange thermique du troisième courant réfrigérant (64) sous forme essentiellement liquide avec le courant de gaz naturel liquéfié (22) dans le troisième échangeur thermique (24).

8. Procédé selon l'une quelconque des revendications précédentes, **caractérisé en ce qu'**il comprend les étapes suivantes :
- division du courant de charge pré-refroidie (18) issu du premier échangeur thermique (16) en un courant principal (138) de charge pré-refroidie, et en un courant auxiliaire (140) de détente,
- détente du courant auxiliaire de détente (140) jusqu'à une basse pression inférieure d'au moins 5 bars à la pression du courant principal (138), et
- passage successif d'un courant issu du courant de détente (140) dans le deuxième échangeur thermique (20) et dans le troisième échangeur thermique (24) pour délivrer un courant (148) de gaz naturel liquéfié sous-refroidi de basse pression.

9. Procédé selon l'une quelconque des revendications précédentes, **caractérisé en ce que** la teneur molaire en azote de chacun du premier courant de réfrigérant (60), du deuxième courant de réfrigérant (62), et du troisième courant de réfrigérant (64), est supérieure à 90 %.

10. Procédé selon l'une quelconque des revendications 1 à 8, **caractérisé en ce que** le premier courant de réfrigérant (60) est formé à base de gaz naturel ayant une teneur molaire en méthane supérieure à 70 %.

11. Procédé selon la revendication 10, **caractérisé en ce que** le deuxième courant de réfrigérant (62) comprend une teneur molaire en méthane supérieure à 90 %.

12. Procédé selon l'une quelconque des revendications 10 ou 11, **caractérisé en ce que** le premier courant de réfrigérant (60) comprend une teneur molaire en dioxyde de carbone supérieure à 5 %

13. Procédé selon l'une quelconque des revendications précédentes, **caractérisé en ce que** la pression à la sortie du premier appareil de compression (32) est supérieure à 50 bars, avantageusement supérieure à 70 bars, et **en ce que** la pression à l'entrée du premier appareil de compression (32) est supérieure à 10 bars, avantageusement supérieure à 15 bars.

14. Procédé selon l'une quelconque des revendications précédentes, **caractérisé en ce que** chacun du deuxième échangeur thermique, et du troisième échangeur thermique ne comporte que deux fluides.

15. Procédé selon l'une quelconque des revendications précédentes, **caractérisé en ce qu'**un deuxième courant de réfrigérant comprimé est formé à la sortie du deuxième appareil de compression, le deuxième courant de réfrigérant comprimé étant introduit, après refroidissement, dans la deuxième turbine de détente sans passer par premier échangeur thermique, ni par le troisième échangeur thermique.

16. Installation (10 ; 100 ; 110 ; 120 ; 130 ; 150 ; 170 ; 180 ; 190) de production d'un courant (14) de gaz naturel liquéfié sous-refroidi à partir d'un courant (12) de charge de gaz naturel, du type comprenant :
- des moyens de pré-refroidissement du courant de charge (12) de gaz naturel comprenant un premier échangeur thermique (16) pour obtenir un courant (18) de charge pré-refroidie à une température inférieure à - 20°C ;
- des moyens de liquéfaction du courant de charge pré-refroidie comprenant un deuxième échangeur thermique (20) pour obtenir au moins un courant (22) de gaz naturel liquéfié à une température inférieure à - 80°C ;
- des moyens de sous-refroidissement du courant de gaz naturel liquéfié comprenant un troisième échangeur thermique (24) pour obtenir un courant (14) de gaz naturel liquéfié sous-refroidi jusqu'à une température inférieure à -120°C ;
- un premier cycle (26) de réfrigération, le courant de charge (12) étant mis en relation d'échange thermique dans le premier échangeur thermique (16) avec un premier courant (60) de réfrigérant
- un deuxième cycle (28) de réfrigération comprenant une deuxième turbine de détente dynamique (42) et un deuxième appareil de compression (42), le courant de charge pré-refroidie (18) étant mis en relation d'échange thermique dans le deuxième échangeur thermique (20) avec un deuxième courant (62) de réfrigérant gazeux produit à partir d'un deuxième courant gazeux (76) de fluide réfrigérant détendu provenant de la deuxième turbine de détente dynamique (42) ;
- un troisième cycle (30) de réfrigération comprenant une troisième turbine de détente dynamique (52) distincte et de la deuxième turbine de détente dynamique (42) et un troisième appareil de compression (50), le courant de gaz naturel liquéfié (22) étant mis en relation d'échange thermique dans le troisième échangeur thermique (24) avec un troisième courant (64) de réfrigérant circulant dans le troisième cycle de réfrigération (30), le troisième courant de réfrigérant (64) étant produit au moins partiellement à partir d'un troisième courant gazeux (92) de fluide détendu issu de la troisième turbine de détente dynamique (52) ;
le premier cycle de réfrigération (26) comprenant des moyens (66, 68) de convoyage du premier courant de réfrigérant réchauffé (66) obtenu à la sortie du premier échangeur thermique (16) vers le premier appareil de compression (32) sans passer par le deuxième échangeur thermique (20) et sans passer par le troisième échangeur thermique (24) ;
le deuxième cycle de réfrigération (28) comprenant des moyens (76, 78) de convoyage du deuxième courant de réfrigérant réchauffé (76) obtenu à la sortie du deuxième échangeur thermique (20) vers le deuxième appareil de compression (40), sans passer par le premier échangeur thermique (16) et sans passer par le troisième échangeur thermique (24);
le troisième cycle de réfrigération (30) comprenant des moyens (86, 88) de convoyage du troisième courant réfrigérant réchauffé (86) issu du troisième échangeur thermique (24) vers le troisième appareil de compression (50) sans passer par le premier échangeur thermique (16) et sans passer par le deuxième échangeur thermique (20), **caractérisée en ce que** le premier cycle de réfrigération comprend une première turbine de détente dynamique (34) et un premier appareil de compression (32), le courant de charge (12) étant mis en relation d'échange thermique dans le premier échangeur thermique (16) avec un premier courant (60) de réfrigérant essentiellement gazeux produit dans le premier cycle de réfrigération (26) à partir d'un premier courant gazeux (72) de fluide réfrigérant détendu issu de la première turbine de détente dynamique (34), et **en ce que** la deuxième turbine de détente dynamique (42) est distincte de la première turbine de détente dynamique (34), la troisième turbine de détente dynamique (52) étant distincte de la première turbine de détente dynamique (34),
et **en ce que** le premier échangeur thermique ne comporte que deux fluides.

17. Installation (10, 100, 110, 120, 130 ; 150 ; 170 ; 180 ; 190) selon la revendication 16, **caractérisée en ce que** le premier échangeur thermique (16), le deuxième échangeur thermique (20) et le troisième échangeur thermique (24), sont à tubes et calandre de type classique ou bobiné.

18. Installation (10, 100, 110, 120, 130 ; 150 ; 170 ; 180 ; 190) selon la revendication 17, **caractérisée en ce que** le premier échangeur thermique (16), le deuxième échangeur thermique (20) et le troisième échangeur thermique (24) sont en acier inoxydable austénitique.

19. Installation (10 ; 100 ; 110 ; 120 ; 170 ; 180 ; 190) selon l'une des revendications 17 ou 18, **caractérisée en ce que** le premier échangeur thermique (16), le deuxième échangeur thermique (20) et le troisième échangeur thermique (24), sont à tubes et calandre de type classique.

20. Installation (10 ; 100 ; 110 ; 120 ; 170 ; 180 ; 190) selon l'une quelconque des revendications 16 à 19, **caractérisée en ce que** chacun du deuxième échangeur thermique, et du troisième échangeur thermique ne comporte que deux fluides.

## Patentansprüche

1. Verfahren zur Herstellung eines Stroms (14) von unterkühltem, verflüssigtem Erdgas ausgehend von einem Betriebs-Strom (12) von Erdgas, des Typs aufweisend die folgenden Schritte:
- Vor-Kühlen des Betriebs-Stroms (12) von Erdgas durch Passieren durch einen ersten Wärmetauscher (16) zum Erlangen eines vor-gekühlten Betriebs-Stroms (18) mit einer Temperatur unter -20°C,
- Verflüssigen des vor-gekühlten Betriebs-Stroms (18) durch Passieren durch einen zweiten Wärmetauscher (20) zum Erlangen wenigstens eines Stroms (22) von verflüssigtem Erdgas mit einer Temperatur unter -80°C,
- Unter-Kühlen des Stroms von verflüssigtem Erdgas (22) durch Passieren durch einen dritten Wärmetauscher (24) zum Erlangen eines Stroms (14) von verflüssigtem, unterkühltem Erdgas mit einer Temperatur unter -120°C,
- Wärmetauschen des Betriebs-Stroms (12) in dem ersten Wärmetauscher (16) mit einem ersten Strom (60) von Kältemittel,
- Wärmetauschen des vor-gekühlten Betriebs-Stroms (18) in dem zweiten Wärmetauscher (20) mit einem zweiten Strom (62) von gasförmigem Kältemittel, der in einem zweiten Kühlungs-Kreis (28) zirkuliert, wobei der zweite Strom von gasförmigem Kältemittel (62) erstellt ist ausgehend von einem zweiten, gasförmigen Strom (82) von expandiertem Fluid, der von einer zweiten Turbine (42) dynamischer Expansion stammt,
- Wärmetauschen des Stroms von verflüssigtem Erdgas (22) in dem dritten Wärmetauscher (24) mit einem dritten Strom (64) von Kältemittel, der in einem dritten Kühlungs-Kreis (30) zirkuliert, wobei der dritte Strom von Kältemittel (64) erstellt ist wenigstens teilweise ausgehend von einem dritten gasförmigen Strom (92) von expandiertem Fluid, der von einer dritten Turbine (52) dynamischer Expansion stammt, die von der zweiten Turbine dynamischer Expansion (42) verschieden ist,
- Fördern des ersten Stroms (66) von erwärmtem Kältemittel, der am Ausgang des ersten Wärmetauschers (16) erlangt ist, zu einer ersten Verdichter-Vorrichtung (26) ohne Passieren durch den zweiten Wärmetauscher (20) und ohne Passieren durch den dritten Wärmetauscher (24),
- Fördern des zweiten Stroms (76) von erwärmtem Kältemittel, der von dem zweiten Wärmetauscher (20) stammt, zu einer zweiten Verdichter-Vorrichtung (40) ohne Passieren durch den ersten Wärmetauscher (16) und ohne Passieren durch den dritten Wärmetauscher (24),
- Fördern des dritten Stroms (86) von erwärmtem Kältemittel, der von dem dritten Wärmetauscher (24) stammt, zu einer dritten Verdichter-Vorrichtung (30) ohne Passieren durch den ersten Wärmetauscher (16) und ohne Passieren durch den zweiten Wärmetauscher (24),
**dadurch gekennzeichnet, dass** der erste Strom von Kältemittel ein im Wesentlichen gasförmiger Strom ist, wobei dieser Strom in einem ersten Kühlungs-Kreis (26) erstellt ist ausgehend von einem ersten gasförmigen Strom (72) von expandiertem Kältemittelfluid, der von einer ersten Turbine (34) dynamischer Expansion stammt, wobei die zweite Turbine dynamischer Expansion von der ersten Turbine dynamischer Expansion (34) verschieden ist, wobei die dritte Turbine (52) dynamischer Expansion von der ersten Turbine dynamischer Expansion (34) verschieden ist,
und dass der erste Wärmetauscher nur zweite Fluide umfasst.

2. Verfahren gemäß Anspruch 1, **dadurch gekennzeichnet, dass** es die folgenden Schritte aufweist:
- Trennen des ersten gasförmigen Stroms von expandiertem Kältemittelfluid (72) in den ersten Strom von gasförmigem Kältemittel (60) und in einen ersten Hilfs-Kühlungs-Strom (102),
- Wärmetauschen des ersten Hilfs-Kühlungs-Stroms (102) in einem zweiten Kreis-Tauscher (44) mit einem zweiten Strom von verdichtetem Kältemittel (80), der von der zweiten Verdichter-Vorrichtung (40) stammt, zum Bilden eines zweiten Stroms von gekühltem, verdichtetem Kältemittel (81),
- Fördern des zweiten Stroms von gekühltem, verdichtetem Kältemittel (81) zu der zweiten Expansions-Turbine (42) zum Bilden des zweiten, gasförmigen Stroms von expandiertem Kältemittelfluid (82).

3. Verfahren gemäß einem der Ansprüche 1 oder 2, **dadurch gekennzeichnet, dass** es die folgenden Schritte aufweist:
- Trennen des zweiten, gasförmigen Stroms von expandiertem Kältemittelfluid (82) in den zweiten Strom von gasförmigem Kältemittel (62) und in einen zweiten Hilfs-Kühlungs-Strom (112), und
- Wärmetauschen des zweiten Hilfs-Kühlungs-Stroms (112) in einem dritten Kreis-Tauscher mit einem dritten Strom (90) von verdichtetem Kältemittel, der von der dritten Verdichter-Vorrichtung (50) stammt, zum Bilden eines dritten Stroms von gekühltem, verdichtetem Kältemittel (91),
- Fördern des dritten Stroms von gekühltem, verdichtetem Kältemittel (91) zu der dritten Expansions-Turbine (52) zum Bilden des dritten, gasförmigen Stroms von expandiertem Kältemittelfluid (92).

4. Verfahren gemäß irgendeinem der vorhergehenden Ansprüche, **dadurch gekennzeichnet, dass** die Kältemittelfluide, die respektive in dem ersten Kühlungs-Kreis (26), in dem zweiten Kühlungs-Kreis (28) und in dem dritten Kühlungs-Kreis (30) zirkulieren, völlig getrennt sind,
wobei der erste Strom von erwärmtem Kältemittel (66), der von dem ersten Wärmetauscher (16) stammt, der zweite Strom von erwärmtem Kältemittel (76), der von dem zweiten Wärmetauscher (20) stammt, und der dritte Strom von erwärmtem Kältemittel (86), der von dem dritten Wärmetauscher (24) stammt, respektive gefördert werden zu den verschiedenen Verdichtern respektive der ersten Verdichter-Vorrichtung (32), der zweiten Verdichter-Vorrichtung (40) und der dritten Verdichter-Vorrichtung (50), um getrennt voneinander verdichtet zu werden.

5. Verfahren gemäß irgendeinem der Ansprüche 1 bis 3, **dadurch gekennzeichnet, dass** es die folgenden Schritte aufweist:
- Bilden wenigstens eines Misch-Stroms (186; 196) ausgehend von wenigstens zweien unter dem ersten Strom von erwärmtem Kältemittel (66), dem zweiten Strom von erwärmtem Kältemittel (76) und dem dritten Strom von erwärmtem Kältemittel (86),
- Verdichten des oder jedes Misch-Stroms (186; 196) in einem gemeinsamen Verdichter (182; 192) aus wenigstens zweien von der ersten Verdichter-Vorrichtung (32), der zweiten Verdichter-Vorrichtung (40) und der dritten Verdichter-Vorrichtung (50) .

6. Verfahren gemäß irgendeinem der vorhergehenden Ansprüche, **dadurch gekennzeichnet, dass** der dritte Strom von Kältemittel (64) im Wesentlichen gasförmig ist vor seiner Einbringung in den dritten Wärmetauscher (24).

7. Verfahren gemäß irgendeinem der Ansprüche 1 bis 5, **dadurch gekennzeichnet, dass** es die folgenden Schritte aufweist:
- Trennen des Stroms von verdichtetem Kältemittel (90), der von der dritten Verdichter-Vorrichtung (50) stammt, in einen Strom (154) zur Bildung des dritten Stroms von Kältemittel (64) und in einen gasförmigen Strom (156) zur Kühlung des Stroms zur Bildung (154),
- Fördern des gasförmigen Stroms zur Kühlung (156) zu der dritten Expansions-Turbine (52), und Wärmetauschen des gasförmigen, expandierten Stroms zur Kühlung (92), der von der dritten Expansions-Turbine (52) stammt, mit dem Strom zur Bildung (154) zum Verflüssigen des Stroms zur Bildung (154),
- Fördern des verflüssigten Stroms zur Bildung (154) zu einer hydraulischen Expansions-Turbine (152) zum Bilden des dritten Stroms von Kältemittel (64) in im Wesentlichen flüssiger Form,
- Wärmetauschen des dritten Stroms von Kältemittel (64) in im Wesentlichen flüssiger Form mit dem Strom von verflüssigtem Erdgas (22) in dem dritten Wärmetauscher (24).

8. Verfahren gemäß irgendeinem der vorhergehenden Ansprüche, **dadurch gekennzeichnet, dass** es die folgenden Schritte aufweist:
- Teilen des vor-gekühlten Betriebs-Stroms (18), der von dem ersten Wärmetauscher (16) stammt, in einen vor-gekühlten Haupt-Betriebs-Strom (138) und in einen Expansions-Hilfs-Strom (140),
- Expandieren des Expansions-Hilfs-Stroms (140) bis auf einen niedrigen Druck, der um wenigstens 5 bar kleiner ist als der Druck des Haupt-Stroms (138), und
- sukzessive Passieren eines Stroms, der von dem Expansions-Strom (140) stammt, durch den zweiten Wärmetauscher (20) und durch den dritten Wärmetauscher (24) zum Liefern eines Stroms (148) von verflüssigtem, unterkühltem Erdgas niedrigen Drucks.

9. Verfahren gemäß irgendeinem der vorhergehenden Ansprüche, **dadurch gekennzeichnet, dass** der Molgehalt an Stickstoff jedes von dem ersten Strom von Kältemittel (60), des zweiten Stroms von Kältemittel (62) und des dritten Stroms von Kältemittel (64) größer als 90% ist.

10. Verfahren gemäß irgendeinem der Ansprüche 1 bis 8, **dadurch gekennzeichnet, dass** der erste Strom von Kältemittel (60) auf Basis von Erdgas gebildet ist, das einen Molgehalt an Methan von größer als 70% hat.

11. Verfahren gemäß Anspruch 10, **dadurch gekennzeichnet, dass** der zweite Strom von Kältemittel (62) einen Molgehalt an Methan von größer als 90% hat.

12. Verfahren gemäß irgendeinem der Ansprüche 10 oder 11, **dadurch gekennzeichnet, dass** der erste Strom von Kältemittel (60) einen Molgehalt an Kohlenstoffdioxid von größer als 5% hat.

13. Verfahren gemäß irgendeinem der vorhergehenden Ansprüche, **dadurch gekennzeichnet, dass** der Druck am Ausgang der ersten Verdichter-Vorrichtung (32) größer ist als 50 bar, vorteilhafterweise größer ist als 70 bar, und dass der Druck am Eingang der ersten Verdichter-Vorrichtung (32) größer ist als 10 bar, vorteilhafterweise größer ist als 15 bar.

14. Verfahren gemäß irgendeinem der vorhergehenden Ansprüche, **dadurch gekennzeichnet, dass** jeder von dem zweiten Wärmetauscher und von dem dritten Wärmetauscher nur zwei Fluide umfasst.

15. Verfahren gemäß irgendeinem der vorhergehenden Ansprüche, **dadurch gekennzeichnet, dass** ein zweiter Strom von verdichtetem Kältemittel am Ausgang der zweiten Verdichter-Vorrichtung gebildet ist, wobei der zweite Strom von verdichtetem Kältemittel nach der Kühlung in die zweite Expansions-Turbine eingebracht wird ohne Passieren durch den ersten Wärmetauscher und durch den dritten Wärmetauscher.

16. Einrichtung (10; 100; 110; 120; 130; 150; 170; 180; 190) zur Herstellung eines Stroms (14) von verflüssigtem, unterkühltem Erdgas ausgehend von einem Betriebs-Strom (12) von Erdgas, des Typs aufweisend:
- Mittel zum Vor-Kühlen des Betriebs-Stroms (12) von Erdgas, mit einem ersten Wärmetauscher (16) zum Erlangen eines vor-gekühlten Betriebs-Stroms (18) mit einer Temperatur unter -20°C,
- Mittel zum Verflüssigen des vor-gekühlten Betriebs-Stroms, mit einem zweiten Wärmetauscher (20) zum Erlangen wenigstens eines Stroms (22) von verflüssigtem Erdgas mit einer Temperatur unter -80°C,
- Mittel zum Unter-Kühlen des Stroms von verflüssigtem Erdgas, mit einem dritten Wärmetauscher (24) zum Erlangen eines Stroms (14) von verflüssigtem, unterkühltem Erdgas mit einer Temperatur unter -120°C,
- einen ersten Kühlungs-Kreis (26), wobei der Betriebs-Stroms (12) in dem ersten Wärmetauscher (16) mit einem ersten Strom (60) von Kältemittel wärmegetauscht wird,
- einen zweiten Kühlungs-Kreis (28), mit einer zweiten Turbine dynamischer Expansion (42) und einer zweiten Verdichter-Vorrichtung (42), wobei der vor-gekühlte Betriebs-Strom (18) in dem zweiten Wärmetauscher (20) mit einem zweiten Strom (62) von gasförmigem Kältemittel wärmegetauscht wird, das erstellt wird ausgehend von einem zweiten, gasförmigen Strom (76) von expandiertem Kältemittelfluid, der von der zweiten Turbine dynamischer Expansion (42) stammt,
- einen dritten Kühlungs-Kreis (30) mit einer dritten Turbine dynamischer Expansion (52), die von der zweiten Turbine dynamischer Expansion (42) verschieden ist, und einer dritten Verdichter-Vorrichtung (50), wobei der Strom von verflüssigtem Erdgas (22) in dem dritten Wärmetauscher (24) wärmegetauscht wird mit einem dritten Strom (64) von Kältemittel, der in dem drittem Kühlungs-Kreis (30) zirkuliert, wobei der dritte Strom von Kältemittel (64) erstellt ist zumindest teilweise ausgehend von einem dritten, gasförmigen Strom (92) von expandiertem Fluid, der von der dritten Turbine dynamischer Expansion (52) stammt,
wobei der erste Kühlungs-Kreis (26) aufweist Mittel (66, 68) zum Fördern des ersten Stroms von erwärmtem Kältemittel (66), der erlangt wird am Ausgang des ersten Wärmetauschers (16), zu der ersten Verdichter-Vorrichtung (32) ohne durch den zweiten Wärmetauscher (20) zu passieren und ohne durch den dritten Wärmetauscher (24) zu passieren,
wobei der zweite Kühlungs-Kreis (28) aufweist Mittel (76, 78) zum Fördern des zweiten Stroms von erwärmtem Kältemittel (76), der erlangt wird am Ausgang des zweiten Wärmetauschers (20), zu der zweiten Verdichter-Vorrichtung (40) ohne durch den ersten Wärmetauscher (16) zu passieren und ohne durch den dritten Wärmetauscher (24) zu passieren,
wobei der dritte Kühlungs-Kreis (30) aufweist Mittel (86, 88) zum Fördern des dritten Stroms erwärmten Kältemittels (86), der von dem dritten Wärmetauscher stammt (24), zu der dritten Verdichter-Vorrichtung (50) ohne durch den ersten Wärmetauscher (16) zu passieren und ohne durch den zweiten Wärmetauscher (20) zu passieren,
**dadurch gekennzeichnet, dass**
der erste Kühlungskreis aufweist eine erste Turbine dynamischer Expansion (34) und eine erste Verdichter-Vorrichtung (32), wobei der Betriebs-Strom (12) in dem ersten Wärmetauscher (16) wärmegetauscht wird mit einem ersten Strom (60) von im Wesentlichen gasförmigem Kältemittel, das in dem ersten Kühlungs-Kreis (26) erstellt wird ausgehend von einem ersten gasförmigen Strom (72) von expandiertem Kältemittelfluid, der von der ersten Turbine dynamischer Expansion (34) stammt, und dass die zweite Turbine dynamischer Expansion (42) von der ersten Turbine dynamischer Expansion (34) verschieden ist, wobei die dritte Turbine dynamischer Expansion (52) verschieden ist von der ersten Turbine dynamischer Expansion (34),
und dass der erste Wärmetauscher nur zwei Fluide umfasst.

17. Einrichtung (10, 100, 110, 120, 130; 150; 170; 180; 190) gemäß Anspruch 16, **dadurch gekennzeichnet, dass** der erste Wärmetauscher (16), der zweite Wärmetauscher (20) und der dritte Wärmetauscher (24) aus Rohren und Kühlergrill klassischen Typs oder gewickelt sind.

18. Einrichtung (10, 100, 110, 120, 130; 150; 170; 180; 190) gemäß Anspruch 17, **dadurch gekennzeichnet, dass** der erste Wärmetauscher (16), der zweite Wärmetauscher (20) und der dritte Wärmetauscher (24) aus rostfreiem austenitischem Stahl sind.

19. Einrichtung (10; 100; 110; 120; 170; 180; 190) gemäß einem der Ansprüche 17 oder 18, **dadurch gekennzeichnet, dass** der erste Wärmetauscher (16), der zweite Wärmetauscher (20) und der dritte Wärmetauscher (24) aus Rohren und Kühlergrill klassischen Typs sind.

20. Einrichtung (10; 100; 110; 120; 170; 180; 190) gemäß irgendeinem der Ansprüche 16 bis 19, **dadurch gekennzeichnet, dass** der zweite Wärmetauscher und der dritte Wärmetauscher nur zwei Fluide umfassen.

## Claims

1. Process for the production of a subcooled liquefied natural gas stream (14) from a natural gas feed stream (12), of the type comprising the following steps:
- precooling the natural gas feed stream (12) by passing it through a first heat exchanger (16) in order to obtain a feed stream (18) precooled to a temperature below -20°C;
- liquefying the precooled feed stream (18) by passing it through a second heat exchanger (20) in order to obtain at least one liquefied natural gas stream (22) at a temperature below -80°C;
- subcooling the liquefied natural gas stream (22) by passing it through a third heat exchanger (24) in order to obtain a liquefied natural gas stream (14) subcooled to a temperature below -120°C;
- placing the feed stream (12) in a heat exchange relationship in the first heat exchanger (16) with a first stream (60) of refrigerant;
- placing the precooled feed stream (18) in a heat exchange relationship in the second heat exchanger (20) with a second stream (62) of gaseous refrigerant circulating in a second refrigeration cycle (28), the second gaseous refrigerant stream (62) being produced from a second gaseous stream (82) of expanded fluid coming from a second dynamic expansion turbine (42);
- placing the liquefied natural gas stream (22) in a heat exchange relationship in the third heat exchanger (24) with a third refrigerant stream (64) circulating in a third refrigeration cycle (30), the third refrigerant stream (64) being produced at least partly from a third gaseous stream (92) of expanded fluid issuing from a third dynamic expansion turbine (52) separate from the second dynamic expansion turbine (42);
- conveying the first stream (66) of heated refrigerant obtained at the outlet of the first heat exchanger (16) to a first compression device (26) without passing through the second heat exchanger (20) and without passing through the third heat exchanger (24);
- conveying the second stream (76) of heated refrigerant issuing from the second heat exchanger (20) to a second compression device (40) without passing through the first heat exchanger (16) and without passing through the third heat exchanger (24);
- conveying the third stream (86) of heated refrigerant issuing from the third heat exchanger (24) to a third compression device (30) without passing through the first heat exchanger (16) and without passing through the second heat exchanger (20),
**characterized in that** the first refrigerant stream is a substantially gaseous refrigerant, the latter stream being produced in a first refrigeration cycle (26) from a first gaseous stream (72) of expanded refrigerant fluid issuing from a first dynamic expansion turbine (34); the second dynamic expansion turbine (42) being separate from the first dynamic expansion turbine (34); the third dynamic expansion turbine (52) being separate from the first dynamic expansion turbine (34),
and **in that** the first heat exchanger contains only two fluids.

2. Process according to claim 1, **characterized in that** it comprises the following steps:
- separating the first gaseous stream of expanded refrigerant fluid (72) into the first gaseous refrigerant stream (60) and a first auxiliary cooling stream (102);
- placing the first auxiliary cooling stream (102) in a heat exchange relationship in a second cycle exchanger (44) with a second compressed refrigerant stream (80) issuing from the second compression device (40) in order to form a second cooled compressed refrigerant stream (81),
- conveying the second cooled compressed refrigerant stream (81) to the second expansion turbine (42) in order to form the second gaseous stream of expanded refrigerant fluid (82).

3. Process according to either claim 1 or claim 2, **characterized in that** it comprises the following steps:
- separating the second gaseous stream of expanded refrigerant fluid (82) into the second gaseous refrigerant stream (62) and a second auxiliary cooling stream (112), and
- placing the second auxiliary cooling stream (112) in a heat exchange relationship in a third cycle exchanger with a third stream (90) of compressed refrigerant issuing from the third compression device (50) in order to form a third cooled compressed refrigerant stream (91),
- conveying the third cooled compressed refrigerant stream (91) to the third expansion turbine (52) in order to form the third gaseous stream of expanded refrigerant fluid (92).

4. Process according to any one of the preceding claims, **characterized in that** the refrigerant fluids circulating in the first refrigeration cycle (26), in the second refrigeration cycle (28) and in the third refrigeration cycle (30) are completely separate,
the first heated refrigerant stream (66) issuing from the first heat exchanger (16), the second heated refrigerant stream (76) issuing from the second heat exchanger (20), and the third heated refrigerant stream (86) issuing from the third heat exchanger (24) being conveyed to separate compressors of the first compression device (32), of the second compression device (40) and of the third compression device (50), respectively, in order to be compressed separately from one another.

5. Process according to any one of claims 1 to 3, **characterized in that** it comprises the following steps:
- forming at least one mixed stream (186; 196) from at least two of the first heated refrigerant stream (66), the second heated refrigerant stream (76) and the third heated refrigerant stream (86),
- compressing the or each mixed stream (186; 196) in a compressor (182; 192) common to at least two of the first compression device (32), the second compression device (40) and the third compression device (50).

6. Process according to any one of the preceding claims, **characterized in that** the third refrigerant stream (64) is substantially gaseous before being introduced into the third heat exchanger (24).

7. Process according to any one of claims 1 to 5, **characterized in that** it comprises the following steps:
- separating the compressed refrigerant stream (90) issuing from the third compression device (50) into a stream (154) for forming the third refrigerant stream (64) and a gaseous stream (156) for refrigeration of the forming stream (154),
- conveying the gaseous cooling stream (156) to the third expansion turbine (52), and placing the expanded gaseous cooling stream (92) issuing from the third expansion turbine (52) in a heat exchange relationship with the forming stream (154) in order to liquefy the forming stream (154),
- conveying the liquefied forming stream (154) to a hydraulic expansion turbine (152) in order to form the third refrigerant stream (64) in substantially liquid form,
- placing the third refrigerant stream (64) in substantially liquid form in a heat exchange relationship with the liquefied natural gas stream (22) in the third heat exchanger (24).

8. Process according to any one of the preceding claims, **characterized in that** it comprises the following steps:
- dividing the precooled feed stream (18) issuing from the first heat exchanger (16) into a main precooled feed stream (138) and an auxiliary expansion stream (140),
- expanding the auxiliary expansion stream (140) to a low pressure that is at least 5 bar below the pressure of the main stream (138), and
- passing the stream derived from the expansion stream (140) through the second heat exchanger (20) and through the third heat exchanger (24), in succession, in order to deliver a stream (148) of subcooled liquefied natural gas at low pressure.

9. Process according to any one of the preceding claims, **characterized in that** the molar nitrogen content of each of the first refrigerant stream (60), the second refrigerant stream (62) and the third refrigerant stream (64) is greater than 90%.

10. Process according to any one of claims 1 to 8, **characterized in that** the first refrigerant stream (60) is based on natural gas having a molar methane content greater than 70%.

11. Process according to claim 10, **characterized in that** the second refrigerant stream (62) has a molar methane content greater than 90%.

12. Process according to either claim 10 or claim 11, **characterized in that** the first refrigerant stream (60) has a molar carbon dioxide content greater than 5%.

13. Process according to any one of the preceding claims, **characterized in that** the pressure at the outlet of the first compression device (32) is greater than 50 bar, advantageously greater than 70 bar, and **in that** the pressure at the inlet of the first compression device (32) is greater than 10 bar, advantageously greater than 15 bar.

14. Process according to any one of the preceding claims, **characterized in that** the second heat exchanger and the third heat exchanger each contains only two fluids.

15. Process according to any one of the preceding claims, **characterized in that** a second stream of compressed refrigerant is formed at the outlet of the second compression device, the second stream of compressed refrigerant being introduced, after cooling, into the second expansion turbine without passing through either the first heat exchanger or the third heat exchanger.

16. Installation (10; 100; 110; 120; 130; 150; 170; 180; 190) for the production of a subcooled liquefied natural gas stream (14) from a natural gas feed stream (12), of the type comprising:
- means for precooling the natural gas feed stream (12), comprising a first heat exchanger (16) for obtaining a feed stream (18) precooled to a temperature below -20°C;
- means for liquefying the precooled feed stream, comprising a second heat exchanger (20) for obtaining at least one liquefied natural gas stream (22) at a temperature below - 80°C;
- means for subcooling the liquefied natural gas stream, comprising a third heat exchanger (24) for obtaining a liquefied natural gas stream (14) subcooled to a temperature below -120°C;
- a first refrigeration cycle (26), the feed stream (12) being placed in a heat exchange relationship in the first heat exchanger (16) with a first stream (60) of refrigerant;
- a second refrigeration cycle (28) comprising a second dynamic expansion turbine (42), and a second compression device (42), the precooled feed stream (18) being placed in a heat exchange relationship in the second heat exchanger (20) with a second stream (62) of gaseous refrigerant produced from a second gaseous stream (76) of expanded refrigerant fluid coming from the second dynamic expansion turbine (42);
- a third refrigeration cycle (30) comprising a third dynamic expansion turbine (52), separate from the second dynamic expansion turbine (42), and a third compression device (50), the liquefied natural gas stream (22) being placed in a heat exchange relationship in the third heat exchanger (24) with a third refrigerant stream (64) circulating in the third refrigeration cycle (30), the third refrigerant stream (64) being produced at least partly from a third gaseous stream (92) of expanded fluid issuing from the third dynamic expansion turbine (52);
the first refrigeration cycle (26) comprising means (66, 68) for conveying the first heated refrigerant stream (66) obtained at the outlet of the first heat exchanger (16) to the first compression device (32) without passing through the second heat exchanger (20) and without passing through the third heat exchanger (24);
the second refrigeration cycle (28) comprising means (76, 78) for conveying the second heated refrigerant stream (76) obtained at the outlet of the second heat exchanger (20) to the second compression device (40) without passing through the first heat exchanger (16) and without passing through the third heat exchanger (24);
the third refrigeration cycle (30) comprising means (86, 88) for conveying the third heated refrigerant stream (86) issuing from the third heat exchanger (24) to the third compression device (50) without passing through the first heat exchanger (16) and without passing through the second heat exchanger (20),
**characterised in that** the first refrigeration cycle (26) comprises a first dynamic expansion turbine (34) and a first compression device (32), the feed stream (12) being placed in a heat exchange relationship in the first heat exchanger (16) with a first stream (60) of substantially gaseous refrigerant produced in the first refrigeration cycle (26) from a first gaseous stream (72) of expanded refrigerant fluid issuing from the first dynamic expansion turbine (34), and **in that** the second dynamic expansion turbine (42) is separate from the first dynamic expansion turbine (34), the third dynamic expansion turbine (52), being separate from the first dynamic expansion turbine (34);
and **in that** the first heat exchanger contains only two fluids.

17. Installation (10, 100, 110, 120, 130; 150; 170; 180; 190) according to claim 16, **characterized in that** the first heat exchanger (16), the second heat exchanger (20) and the third heat exchanger (24) are tube and calender exchangers of the conventional or coiled type.

18. Installation (10, 100, 110, 120, 130; 150; 170; 180; 190) according to claim 17, **characterized in that** the first heat exchanger (16), the second heat exchanger (20) and the third heat exchanger (24) are made of austenitic stainless steel.

19. Installation (10; 100; 110; 120; 170; 180; 190) according to either claim 17 or claim 18, **characterized in that** the first heat exchanger (16), the second heat exchanger (20) and the third heat exchanger (24) are tube and calender exchangers of the conventional type.

20. Installation (10; 100; 110; 120; 170; 180; 190) according to any one of claims 16 to 19, **characterized in that** the second heat exchanger and the third heat exchanger each contains only two fluids.
